# EUROPEAN PATENT SPECIFICATION

(11) **EP 0 971 016 B1**
(45) Date of publication and mention of the grant of the patent: **21.05.2003**
(21) Application number: 99112782.0
(22) Date of filing: 02.07.1999
(51) Int. Cl.: C09K 19/36, C09K 19/40

(54) **Mesogenic estradiols**
Mesogene Estradiolen
Estradiols mésogènes

(30) Priority: 08.07.1998 EP 98112610
(43) Date of publication of application: 12.01.2000
(73) Proprietor: MERCK PATENT GmbH, 64293 Darmstadt (DE)
(72) Inventor: Coles, Harry, Titchfield, Hants PO15 5DT (GB); Lehmann, Petra, Southhampton, Hants SO19 8RW (GB); Musgrave, Bronje, Stone, Staffordshire ST15 0PF (GB)

(56) References cited:
- EP-A- 0 773 250
- DE-A- 4 234 845
- US-A- 4 316 041
- B.MUSGRAVE: "a new series of nematic bimesogens for the flexoelectro-optic effect" LIQUID CRYSTALS , vol. 21, no. 8, 22 June 1999, pages 1235-1249, XP002116225
- MARCELIS A T M ET AL: "ODD-EVEN EFFECTS IN THE OPTICAL PROPERTIES OF CHIRAL TRIPLET LIQUIDCRYSTALS BASED ON ESTRADIOL" THIN SOLID FILMS, vol. 284/285, 15 September 1996, pages 308-312, XP000685395
- MARCELIS A T M ET AL: "INFLUENCE OF SPACER LENGTHS ON THE PROPERTIES OF CHIRAL TRIPLET LIQUID CRYSTALS BASED ON ESTRADIOL" LIQUID CRYSTALS, vol. 21, no. 1, 1 July 1996, pages 87-93, XP000599873

## Description

The invention relates to mesogenic estradiols of formula I 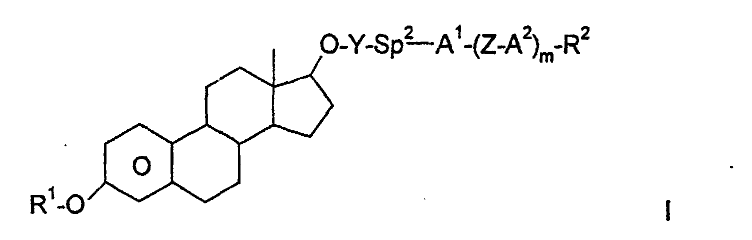 wherein R¹, R², Y, Sp¹, Sp², A¹, A², Z and m have the meaning given in claim 1.

The invention further relates to a liquid crystalline mixture comprising at least one mesogenic estradiol of formula I.

The invention further relates to chiral linear, cyclic or crosslinked anisotropic oligomers or polymers, obtainable by polymerizing one or more mesogenic estradiol compounds of formula I bearing a polymerizable group or liquid crystalline mixtures comprising such compounds, or by coupling the compounds or mixtures to an oligo- or polymer backbone.

The invention also relates to the use of mesogenic estradiols of formula I, mixtures and oligo- and polymers obtainable thereof in optical and electrooptical applications, in particular in flexoelectric liquid crystal devices, in cosmetics, diagnostics, liquid crystal pigments, decorative and security applications or as chiral dopants.

The invention also relates to a flexoelectric liquid crystal device comprising one or more mesogenic estradiols of formula I, or comprising a liquid crystalline mixture with at least one mesogenic estradiol of formula I, or an oligo- or polymer obtained from one or more mesogenic estradiols of formula I.

The invention relates in particular to mesogenic estradiols with a broad chiral nematic phase and a low melting point.
Figure 1 schematically depicts the director and helix configuration in a flexoelectric cholesteric liquid crystalline material of prior art upon application of an electric field.
Figure 2 shows the maximum selectively reflected wavelength of inventive compounds of example 1 versus reduced temperature T-T_{C} (T_{C} = clearing temperature, T = measurement temperature).
Figure 3 shows the maximum selectively reflected wavelength of inventive compounds of example 2 versus reduced temperature T - T_{C}.
Figures 4A, 5A, 6A, 7A, 8A and 9A show the response time of flexoelectric switching of inventive compounds of example 1 versus temperature at different electric fields E.
Figures 4B,C, 5B, 6B,C, 7B,C, 8B,C, and 9B,C show the induced tilt angle φ of flexoelectric switching of inventive compounds of example 1 at different electric fields E and temperatures, respectively.
Figures 10A and 11A show the response time of flexoelectric switching of inventive compounds of example 2 versus temperature at different electric fields E.
Figures 10B,C and 1,C show the induced tilt angle φ of flexoelectric switching of inventive compounds of example 2 at different electric fields E and temperatures, respectively.
Figure 12A shows the response time of flexoelectric switching of an inventive oligomer of example 3 versus temperature at different electric fields E.
Figures 12B and C show the induced tilt angle φ of flexoelectric switching of an inventive oligomer of example 3 at different electric fields E and temperatures, respectively.
Figures 13A, 14A and 15A show the response time of flexoelectric switching of inventive mixtures of example 5 versus temperature at different electric fields E.
Figures 13B,C, 14B,C and 15B,C show the induced tilt angle φ of flexoelectric switching of inventive mixtures of example 5 at different electric fields E and temperatures, respectively.

Mesogenic or liquid crystalline compounds exhibiting a chiral nematic (cholesteric) phase are known in prior art and have been suggested for various applications. They are useful e.g. for liquid crystal displays, optical films, cholesteric pigments, coloured coatings or as chiral dopants.

The WO 95-16007 for example discloses polymerizable mesogenic compounds comprising chiral sugar groups and their use in colour-reflecting layers. The US 4,614,619 discloses polymerizable liquid crystalline compounds that are used for colour-reflecting polymer coatings and comprise a chiral cholesteryl group linked to a polymerizable acrylate or methacrylate group via an alkylene spacer.

However, the chiral compounds as described in prior art often have relatively high melting points. Furthermore, they exhibit often only a narrow or monotropic liquid crystal phase or even do not show liquid crystal phase behaviour at all.

Thus, there is still a need for chiral mesogenic compounds that are easy to synthesize and exhibit low melting points and broad mesophase ranges.

Another aspect of the present invention are mesogenic materials showing a strong flexoelectric effect.

Flexoelectric liquid crystal materials are known in prior art. The flexoelectric effect is described inter alia by Chandrasekhar, "Liquid Crystals", 2^{nd} edition, Cambrige University Press (1992) and P.G. deGennes et al., "The Physics of Liquid Crystals", 2^{nd} edition, Oxford Science Publications (1995).

Flexoelectric distortion can occur in a material comprising molecules with an asymmetric shape and a strong electric dipole moment upon application of an electric field. When no field is applied, the material is undistorted and exhibits no bulk polarization. In the presence of an electric field, however, the permanent dipoles are forced to align along the field and the material will become distorted due to the asymmetric shape of the molecules. This leads to a macroscopic polarization in the material in the direction of the applied field.

In 1987 it was postulated by R.B.Meyer and J.S.Patel in Phys.Rev. Lett. 58 (15), 1538 (1987) that chiral nematic materials with a flexoeletric effect should exhibit fast electro-optic switching, which would make them interesting materials for liquid crystal displays and optical switches. Further work in this field is described e.g. by P. Rudquist et al., Liq. Cryst. **23** (4), 503 (1997).

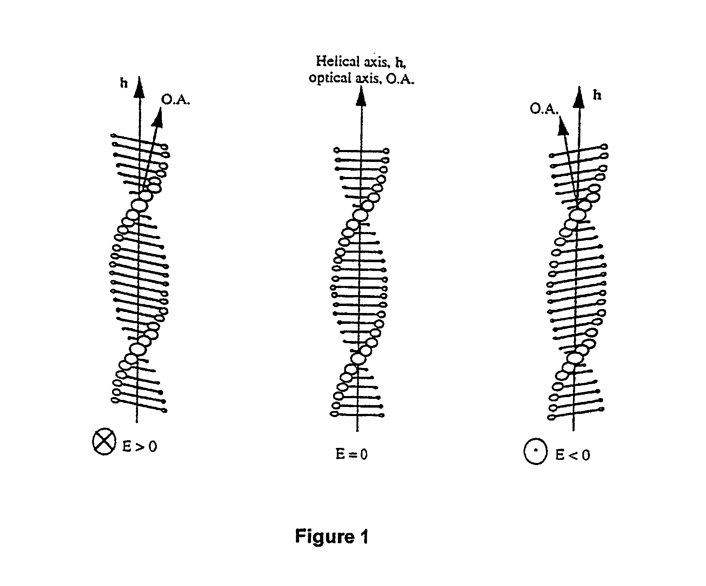

In a flexoelectric chiral nematic liquid crystal material with a helically twisted molecular orientation, application of an electric field perpendicular to the helix axis causes distortion to the molecular directors, whereas the direction of the helical axis remains unchanged. This leads to a change in the optical properties of the material, i.e. a tilt of the optic axis, relative to the helical axis, in the plane perpendicular to the direction of the applied field, as exemplarily depicted in Figure 1.

Figure 1, which is adapted from a diagram by J.S.Patel and S.-D.Lee, J. Appl. Phys. **66** (4) 1879 (1989), depicts the director and helix configuration in a flexoelectric cholesteric liquid crystalline material upon application of an electric field. Therein, h denotes the helix axis, O.A. denotes the optic axis, and E is the electric field, which is directed either into the plane of the drawing (indicated by ⊗) or out of the plane of the drawing (indicated by ⊙).

The tilt of the optic axis causes a change in transmission of a sample of the flexoelectric material placed between crossed polarizers, which can be exploited in electrooptical applications.

Thus, it would be desirable to have available chiral mesogenic or liquid crystal materials that show a strong flexoelectric effect and a low melting point and enable fast electro-optic switching.

It was an aim of the invention to provide new chiral mesogenic compounds with advantageous properties, in particular with a low melting point and a broad chiral nematic phase range. Another aim was to provide chiral mesogenic compounds that exhibit a strong flexoelectric effect and can be used for opitcal switches and display applications. Other aims of the present invention are immediately evident to the person skilled in the art from the following detailed description.

The inventors have found out that these aims can be achieved by providing mesogenic estradiols according to formula I. The compounds of formula I exhibit low melting points, broad chiral nematic phases and show a strong flexoelectric effect. Furthermore, the estradiol group as a chiral group is easily available from natural sources. The inventive compounds of formula I as well as mixtures and polymers obtained thereof are therefore particularly suitable for optical and electrooptical applications.

C. Aguilera et al. in Mol.Cryst.Liq.Cryst. Letters **2(6)**, 185 (1985) and Z.Naturforsch. B:Chem.Sci. **42(1)**, 113 (1987) describes a polymerizable estradiol-bis[4-(2-propenyloxy)benzoate] and thermotropic liquid crystal main chain polymers comprising this compound together with different siloxane spacers. However, the compound disclosed by C. Aguilera et al. exhibits a very high melting point and is therefore not suitable for display applications. Furthermore, there is no hint to flexoelectric liquid crystal compounds.

The term (polmyerizable) mesogenic compound as used in the foregoing and the following comprise compounds with a rod-shaped, board-shaped or disk-shaped mesogenic group, i.e. a group with the ability to induce mesophase behaviour in a compound comprising said group. These compounds do not necessarily have to exhibit mesophase behaviour themselves. Sometimes these compounds show mesophase behaviour only in mixtures with other compounds or when the polymerizable mesogenic compounds or the mixtures thereof are polymerized.

One object of the present invention is a mesogenic estradiol of formula I 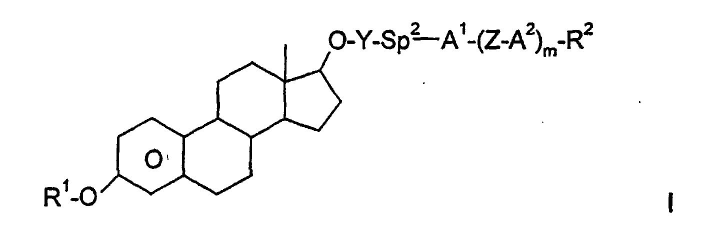 wherein
- R¹: is an alkyl group with 1 to 12 C atoms, wherein one or more non-adjacent CH₂ groups may replaced by -O-, -CH=CH-, -CO-, -OCO- or -COO- such that O-atoms are not directly linked to each other, or is denoting P-Sp¹-X-,
- P: is a polymerizable group,
- Sp¹ and Sp²: are each independently denoting a spacer group with up to 20 C atoms or a single bond,
- X and Y: are each independently -CO-, -CS-, -OCO-, -COO- or a single bond,
- A¹ and A²: are each independently 1,4-phenylene in which, in addition, one or more CH groups may be replaced by N, 1,4-cyclohexylene in which, in addition, one or two non-adjacent CH₂ groups may be replaced by O and/or S, 1,4-cyclohexenylene, 1,4-bicyclo(2,2,2)octylene, piperidine-1,4-diyl, naphthalene-2,6-diyl, decahydronaphthalene-2,6-diyl, or 1,2,3,4-tetrahydro-naphthalene-2,6-diyl, it being possible for all these groups to be unsubstituted, mono- or polysubstituted with halogen, cyano or nitro groups or alkyl, alkoxy or alkanoyl groups having 1 to 7 C atoms wherein one or more H atoms may be substituted by F or Cl,
- Z: is in each case independently -COO-, -OCO-, -CH₂CH₂-, -OCH₂-, -CH₂O-, -CH=CH-, -N=N-, -CH=CH-COO-, -OCO-CH=CH-, -C≡C- or a single bond,
- m: is 0, 1 or 2, and
- R²: is F, Cl, CN, NO₂ or a polar straight chain or branched alkyl or alkoxy group with up to 12 C atoms which is optionally mono- or polysubstituted by F, Cl and/or CN.

Preferred embodiments of the present invention relate to mesogenic estradiols of formula I wherein
- X is a single bond and Sp² is alkylene with 1 to 12 C atoms,
- R² is F, Cl, CN, NO₂, CF₃, OCF₃, OCHF₂ or OC₂F₅, particularly preferably F, Cl, CN or OCF₃,
- R¹ is denoting P-Sp¹-X-,
- P is denoting acryl, methacryl, vinyl, vinyloxy, epoxy or styrene, particularly preferably acryl, methacryl or vinyl.
- Y is -CO- and Sp¹ is a single bond or alkylene with up to 12 C atoms.

Another object of the present invention is a liquid crystalline mixture - comprising at least one mesogenic estradiol of formula I.

Another object of the present invention is a chiral linear, cyclic or crosslinked anisotropic oligomer or polymer, obtainable by polymerizing one or more mesogenic estradiol compounds of formula I bearing a polymerizable group or liquid crystalline mixtures comprising such compounds, or by coupling the compounds or mixtures to an oligo- or polymer backbone.

A further object of the present invention is the use of mesogenic estradiols of formula I, mixtures comprising them or polymers obtainable thereof in flexoelectric liquid crystal devices.

Another object of the invention is the use of mesogenic estradiols of formula I, mixtures comprising them or polymers obtainable thereof in liquid crystal displays, such as STN, TN, AMD-TN, temperature compensation, guest-host, phase change or surface stabilized or polymer stabilized cholesteric texture (SSCT, PSCT) displays, in active and passive optical elements like polarizers, compensators, alignment layers, colour filters or holographic elements, in adhesives, synthetic resins with anisotropic mechanical properties, cosmetics, diagnostics, liquid crystal pigments, for decorative and security applications, in nonlinear optics, optical information storage or as chiral dopants

Of the compounds of formula I especially preferred are those wherein the radical -A¹-(Z-A²)ₘ- comprises one or two six-membered rings.

Preferred subformulae for the group -A¹-(Z-A²)ₘ- are listed below. For reasons of simplicity, Phe in these groups is 1,4-phenylene, Phe L is a 1,4-phenylene group which is substituted by 1 to 4 groups L, with L being F, Cl, CN or an optionally fluorinated alkyl, alkoxy or alkanoyl group with 1 to 7 C atoms, and Cyc is 1,4-cyclohexylene.

The following list is comprising the subformulae II-1 to II-9 as well as their mirror images
- -Phe-: II-1
- -Cyc-: II-2
- -PheL-: II-3
- -Phe-Z-Phe-: II-4
- -Phe-Z-Cyc-: II-5
- -Cyc-Z-Cyc-: II-6
- -PheL-Z-Phe-: II-7
- -PheL-Z-Cyc-: II-8
- -PheL-Z-PheL-: II-9

Particularly preferred are the subformulae II-1, II-2, II-3, II-4 and II-5.

In these preferred groups Z has the meaning given in formula I described above. Preferably Z is -COO-, -OCO-, -CH₂CH₂- or a single bond.

L is preferably F, Cl, CN, NO₂, CH₃, C₂H₅, OCH₃, OC₂H₅, COCH₃, COC₂H₅, CF₃, OCF₃, OCHF₂, OC₂F₅, in particular F, Cl, CN, CH₃, C₂H₅, OCH₃, COCH₃ and OCF₃, most preferably F, CH₃, OCH₃ and COCH₃.

In a preferred embodiment of the present invention the group -A¹-(Z¹-A²)ₘ- is selected from the following formulae and their mirror images 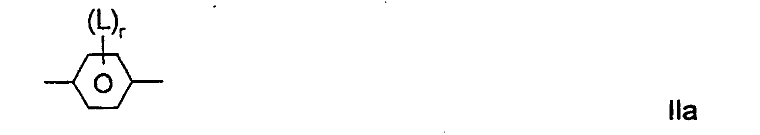 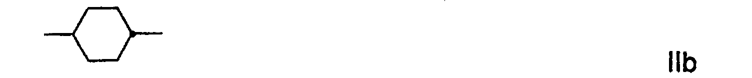 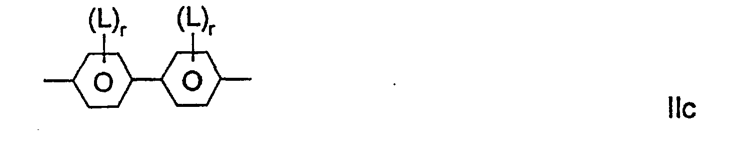 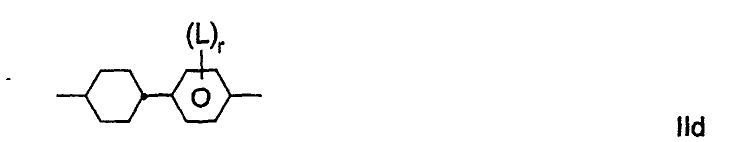 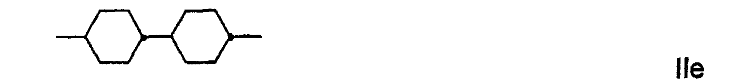 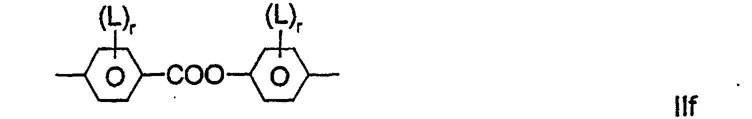 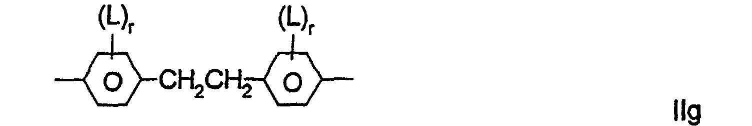 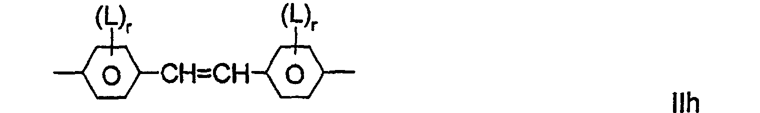 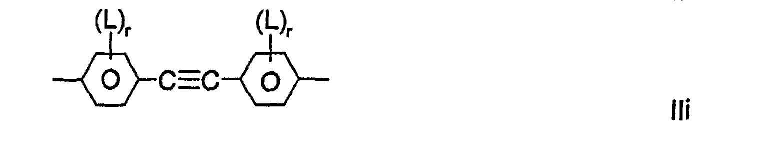 wherein L has the meaning given above and r is 0, 1 or 2.

The group 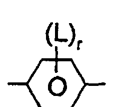 in these preferred formulae is very preferably denoting 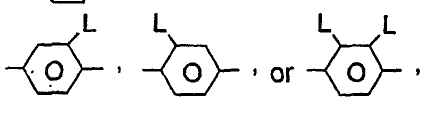 furthermore 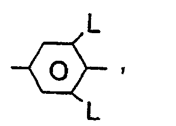 with L having each independently one of the meanings given above.

Particularly preferred are the subformulae IIa to IIe, in particular the subformulae IIa and llb.

R¹ is preferably alkyl, alkoxy or alkenyl with 1 to 12 C atoms.

If R¹ is an alkyl or alkoxy radical, i.e. where the terminal CH₂ group is replaced by -O-, this may be straight-chain or branched. It is preferably straight-chain, has 2, 3, 4, 5, 6, 7 or 8 carbon atoms and - accordingly is preferably ethyl, propyl, butyl, pentyl, hexyl, heptyl, octyl, ethoxy, propoxy, butoxy, pentoxy, hexoxy, heptoxy, or octoxy, furthermore methyl, nonyl, decyl, undecyl, dodecyl, tridecyl, tetradecyl, pentadecyl, methoxy, nonoxy, decoxy, undecoxy, dodecoxy, tridecoxy or tetradecoxy, for example.

Oxaalkyl, i.e. where one CH₂ group is replaced by -O-, is preferably straight-chain 2-oxapropyl (=methoxymethyl), 2- (=ethoxymethyl) or 3-oxabutyl (=2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example.

The term alkenyl in the meaning of R¹ is comprising straight chain and branched alkenyl groups with 2 to 12 C atoms, preferably with 2 to 8 C atoms. Straight chain alkenyl groups are preferred. Further preferred alkenyl groups are C₂-C₄-1E-alkenyl, C₄-C₇-3E-alkenyl, C₅-C₇-4-alkenyl, C₆-C₇-5-alkenyl and C₇-6-alkenyl, in particular C₂-C₇-1E-alkenyl, C₄-C₇-3E-alkenyl and C₅-C₇-4-alkenyl.

Examples for preferred alkenyl groups are vinyl, 1E-propenyl, 1E-butenyl, 1E-pentenyl, 1E-hexenyl, 1E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl and 6-heptenyl. Alkenyl groups with up to 5 C atoms are particularly preferred. Very particularly preferred are vinyl, 1E-propenyl, 1E-butenyl, 3E-butenyl and 3E-pentenyl, in particular vinyl and 3E-butenyl.

In the compounds of formula I R¹ may be an achiral or a chiral group. In case of a chiral group they are preferably selected according to the following formula III: 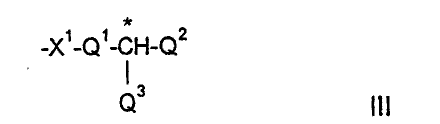 - wherein
- X¹: is -O-, -S-, -CO-, -COO-, -OCO-, -OCOO- or a single bond,
- Q¹: is an alkylene or alkylene-oxy group with 1 to 10 C atoms or a single bond,
- Q²: is an alkyl or alkoxy group with 1 to 10 C atoms which may be unsubstituted, mono- or polysubstituted by halogen or CN, it being also possible for one or more non-adjacent CH₂ groups to be replaced, in each case independently from one another, by -C≡C-, -O-, -S-, -NH-, -N(CH₃)-, -CO-, -COO-, -OCO-, -OCO-O-, -S-CO- or -CO-S- in such a manner that oxygen atoms are not linked directly to one another,
- Q³: is halogen, a cyano group or an alkyl or alkoxy group with 1 to 4 C atoms different from Q².

Preferred chiral groups R¹ are 2-butyl (=1-methylpropyl), 2-methylbutyl, 2-methylpentyl, 3-methylpentyl, 2-ethylhexyl, 2-propylpentyl, 2-octyl, in particular 2-methylbutyl, 2-methylbutoxy, 2-methylpentoxy, 3-methylpentoxy, 2-ethylhexoxy, 1-methylhexoxy, 2-octyloxy, 2-oxa-3-methylbutyl, 3-oxa-4-methylpentyl, 4-methylhexyl, 2-nonyl, 2-decyl, 2-dodecyl, 6-methoxyoctoxy, 6-methyloctoxy, 6-methyloctanoyloxy, 5-methylheptyloxycarbonyl, 2-methylbutyryloxy, 3-methylvaleroyloxy, 4-methylhexanoyloxy, 2-chlorpropionyloxy, 2-chloro-3-methylbutyryloxy, 2-chloro-4-methylvaleryloxy, 2-chloro-3-methylvaleryloxy, 2-methyl-3-oxapentyl, 2-methyl-3-oxahexyl, 1-methoxypropyl-2-oxy, 1-ethoxypropyl-2-oxy, 1-propoxypropyl-2-oxy, 1-butoxypropyl-2-oxy, 2-fluorooctyloxy, 2-fluorodecyloxy for example.

In addition, compounds of formula I containing an achiral branched group R¹ may occasionally be of importance, for example, due to a reduction in the tendency towards crystallization. Branched groups of this type generally do not contain more than one chain branch.

Preferred achiral branched groups are isopropyl, isobutyl (=methylpropyl), isopentyl (=3-methylbutyl), isopropoxy, 2-methylpropoxy and 3-methylbutoxy.

Particularly preferred are compounds of formula I wherein R¹ is denoting P-Sp¹-X.

Further preferred are compounds of formula I exhibiting a strong dipole moment, in particular compounds carrying at least one polar substituent L as defined above, and compounds wherein R² is a polar group, as these compounds can exhibit flexoelectricity and are switchable in an electric field.

Thus, R² in formula I is preferably F, Cl, CN, NO₂, or an alkyl or alkoxy group with 1 to 12 C atoms which is mono- or polysubstituted by F, Cl or CN, preferably by F. Fluorinated alkyl is preferably alkyl or alkoxy with 1 to 3 C atoms, wherein one or more H atoms are substituted by F. Especially preferably R² is selected from F, Cl, CN, NO₂, CF₃, OCF₃, OCHF₂, OC₂F₅, in particular from F, Cl, CN and OCF₃.

X and Y are preferably -CO- or a single bond. Especially preferred are compounds wherein X is a single bond and Y is -CO-.

In the event that both X and Sp¹, or both Y and Sp² respectively, are denoting a single bond, this is to be understood such that the radical -X-Sp¹-, or -Y-Sp²- respectively, in total is denoting a single bond.

P in formula I is preferably a vinyl group, a vinyloxy an acrylate group, a methacrylate group, an epoxy group or a styrene group, especially preferably a vinyl, acrylate or methacrylate group.

As for the spacer groups Sp¹ and Sp² in formula I all groups can be used that are known for this purpose to the skilled in the art. The spacer groups Sp¹ and Sp² are preferably linear or branched alkylene groups having 1 to 20 C atoms, in particular 1 to 12 C atoms, in which, in addition, one or more non-adjacent CH₂ groups may be replaced by -O-, -S-, -NH-, -N(CH₃)-, -CO-, -O-CO-, -S-CO-, -O-COO-, -CO-S-, -CO-O-, -CH(halogen)-, -CH(CN)-, -CH=CH- or -C≡C-.

Typical spacer groups are for example -(CH₂)ₒ-, -(CH₂CH₂O)ᵣ-CH₂CH₂-, -CH₂CH₂-S-CH₂CH₂- or -CH₂CH₂-NH-CH₂CH₂-, with o being an integer from 2 to 12 and r being an integer from 1 to 3.

Preferred spacer groups are ethylene, propylene, butylene, pentylene, hexylene, heptylene, octylene, nonylene, decylene, undecylene, dodecylene, octadecylene, ethyleneoxyethylene, methyleneoxybutylene, ethylene-thioethylene, ethylene-N-methyliminoethylene, 1-methylalkylene, ethenylene, propenylene and butenylene for example.

Especially preferred are inventive chiral compounds of formula I wherein Sp¹ and/or Sp² are denoting alkyl or alkoxy with 2 to 6 C atoms. Straight-chain alkyl or alkoxy groups are especially preferred.

In another preferred embodiment of the invention the chiral compounds of formula I comprise at least one spacer group Sp¹ or Sp² that is a chiral group of the formula IV: 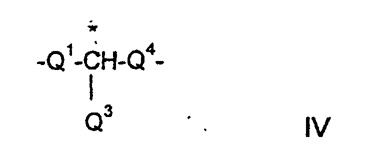 wherein
Q¹ and Q³ have the meanings given in formula III, and
Q⁴ is an alkylene or alkylene-oxy group with 1 to 10 C atoms or a single bond, being different from Q¹.

The two spacer groups Sp in the compounds of formula I may be identical or different.

The inventive compounds can be synthesized according to or in analogy to methods which are known per se and which are described in standard works of organic chemistry such as, for example, Houben-Weyl, Methoden der organischen Chemie, Thieme-Verlag, Stuttgart. Some specific methods of preparation can be taken from the examples.

Another object of the present invention is a liquid crystalline mixture comprising at least one compound of formula I.

For use in flexoelectric devices, the liquid crystalline mixture according to the invention comprises preferably 5 to 90 %, in particular 10 to 75 %, very preferably 35 to 70 % by weight of one or more compounds of formula I.

The liquid crystalline mixture according to the invention preferably comprises 1 to 4, very preferably 1 or 2 compounds of formula I.

In a preferred embodiment of the invention the liquid crystalline mixture is consisting of 2 to 25, preferably 3 to 15 compounds, at least one of which is a compound of formula I. The other compounds are preferably low molecular weight liquid crystalline compounds selected from nematic or nematogenic substances, for example from the known classes of the azoxybenzenes, benzylidene-anilines, biphenyls, terphenyls, phenyl or cyclohexyl benzoates, phenyl or cyclohexyl esters of cyclohehexanecarboxylic acid, phenyl or cyclohexyl esters of cyclohexylbenzoic acid, phenyl or cyclohexyl esters of cyclohexylcyclohexanecarboxylic acid, cyclohexylphenyl esters of benzoic acid, of cyclohexanecarboxylic acid and of cyclohexylcyclohexanecarboxylic acid, phenylcyclohexanes, cyclohexylbiphenyls, phenylcyclohexylcyclohexanes, cyclohexylcyclohexanes, cyclohexylcyclohexenes, cyclohexylcyclohexylcyclohexenes, 1,4-bis-cyclohexylbenzenes, 4,4'-bis-cyclohexylbiphenyls, phenyl- or cyclohexylpyrimidines, phenyl- or cyclohexylpyridines, phenyl- or cyclohexylpyridazines, phenyl- or cyclohexyldioxanes, phenyl- or cyclohexyl-1,3-dithianes, 1,2-diphenyl-ethanes, 1,2-dicyclohexylethanes, 1-phenyl-2-cyclohexylethanes, 1-cyclohexyl-2-(4-phenylcyclohexyl)-ethanes, 1-cyclohexyl-2-biphenyl-ethanes, 1-phenyl2-cyclohexylphenylethanes, optionally halogenated stilbenes, benzyl phenyl ether, tolanes, substituted cinnamic acids and further classes of nematic or nematogenic substances. The 1,4-phenylene groups in these compounds may also be laterally mono- or difluorinated.

The liquid crystalline mixture of this preferred embodiment is based on the achiral compounds of this type.

The most important compounds that are posssible as components of these liquid crystalline mixtures can be characterized by the following formula

R'-L'-G'-E-R"

wherein L' and E, which may be identical or different, are in each case, independently from one another, a bivalent radical from the group formed by -Phe-, -Cyc-, -Phe-Phe-, -Phe-Cyc-, -Cyc-Cyc-, -Pyr-, -Dio-, -B-Phe- and -B-Cyc- and their mirror images, where Phe is unsubstituted or fluorine-substituted 1,4-phenylene, Cyc is trans-1,4-cyclohexylene or 1,4-cyclohexenylene, Pyr is pyrimidine-2,5-diyl or pyridine-2,5-diyl, Dio is 1,3-dioxane-2,5-diyl abd B is 2-(trans-1,4-cyclohexyl)ethyl, pyrimidine-2,5-diyl, pyridine-2,5-diyl or 1,3-dioxane-2,5-diyl.

G' in these compounds is selected from the following bivalent groups -CH=CH-, -N(O)N-, -CH=CY-, CH=N(O)-, -C≡C-, -CH₂-CH₂-, -CO-O-, -CH₂-O-, -CO-S-, -CH₂-S-, -CH=N-, -COO-Phe-COO- or a single bond, with Y being halogen, preferably chlorine, or -CN.

R' and R" are, in each case, independently of one another, alkyl, alkenyl, alkoxy, alkenyloxy, alkanoyloxy, alkoxycarbonyl or alkoxycarbonyloxy with 1 to 18, preferably 3 to 12 C atoms, or alternatively one of R' and R" is F, CF₃, OCF₃, Cl, NCS or CN.

In most of these compounds R' and R" are, in each case, independently of each another, alkyl, alkenyl or alkoxy with different chain length, wherein the sum of C atoms in nematic media generally is between 2 and 9, preferably between 2 and 7.

Many of these compounds or mixtures thereof are commercially available. All of these compounds are either known or can be prepared by methods which are known per se, as described in the literature (for example in the standard works such as Houben-Weyl, Methoden der Organischen Chemie [Methods of Organic Chemistry], Georg-Thieme-Verlag, Stuttgart), to be precise under reaction conditions which are known and suitable for said reactions. Use may also be made here of variants which are known per se, but are not mentioned here.

Another preferred embodiment of the present invention relates to the use of compounds of formula I as chiral dopants for liquid crystal mixtures, and to a liquid crystal mixture comprising one or more chiral dopants selected from formula I. According to this preferred embodiment, a liquid crystal mixture comprises preferably 0.001 to 15 %, in particular 0.01 to 8 % and very particularly preferably 0.1 to 5 % by weight of one or more compounds of formula I.

For applications in liquid crystal display devices the liquid crystalline mixture according to this preferred embodiment preferably contains a chiral component which contains 1 to 4, very preferably 1 or 2 compound ofs formula I.

Another object of the present invention is a polymerizable mesogenic mixture comprising at least two polymerizable compounds, at least one of which is a compound of formula I with a polymerizable group P.

Another object of the present invention is a chiral linear, cyclic or crosslinked anisotropic oligomer or polymer, obtainable by polymerizing one or more mesogenic estradiol compounds of formula

I bearing a polymerizable group P, or a liquid crystalline mixture - comprising such compounds, or by coupling the compounds or mixtures to an oligo- or polymer backbone.

Other polymerizable mesogenic compounds that can be used as comonomers together with the inventive compounds for the preparation of anisotropic polymers are disclosed for example in WO 93/22397; EP 0,261,712; DE 195,04,224; WO 95/22586 or WO 97/00600. The compounds disclosed in these documents, however, are to be regarded merely as examples that shall not limit the scope of this invention.

The polymerizable mesogenic compounds used as comonomers together with the inventive compounds are preferably selected of formula V

P-(Sp-X)ₙ-(A¹-Z¹)ₘ-A²-R⁵ V

wherein P, Sp, X, n, A¹ and A² have the meaning of formula I, m is 0, 1 or 2, Z¹ has one of the meanings of Z in formula I, and R⁵ has one of the meanings of R¹ or R² in formula I.

Typical examples representing such polymerizable mesogenic compounds are shown in the following list of compounds, which should, however, be taken only as illustrative and is in no way intended to restrict, but instead to explain the present invention:

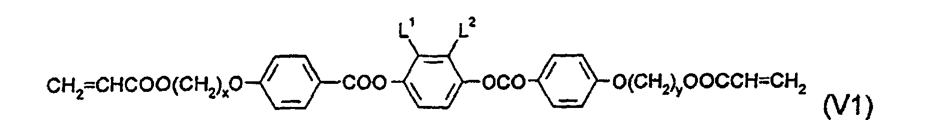

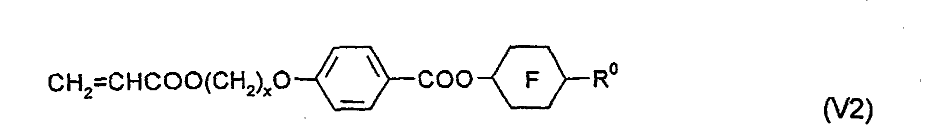

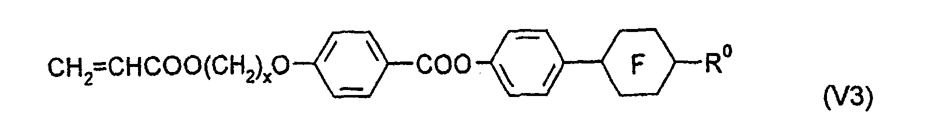

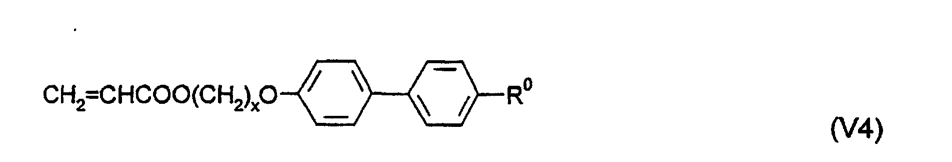

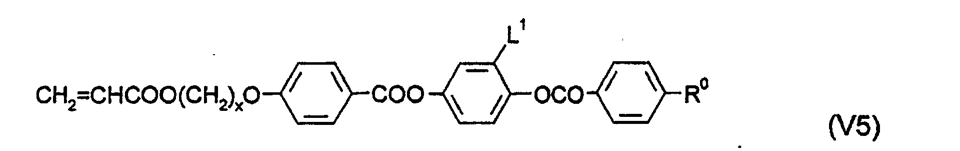

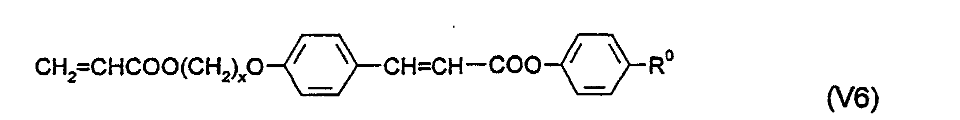

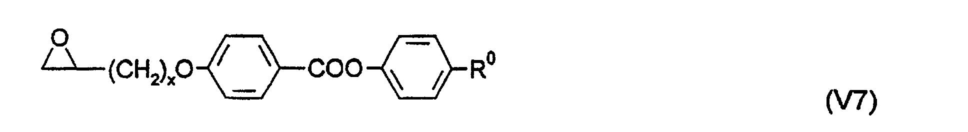

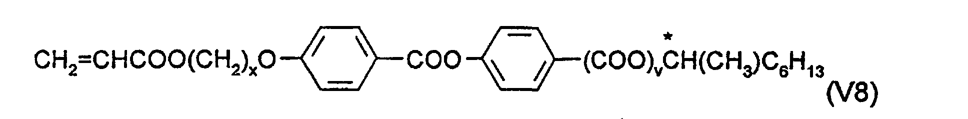

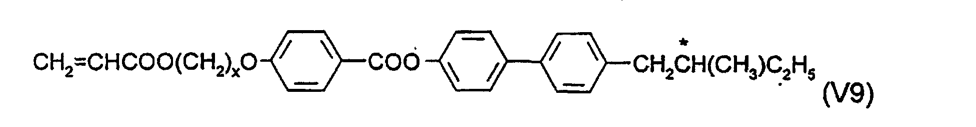

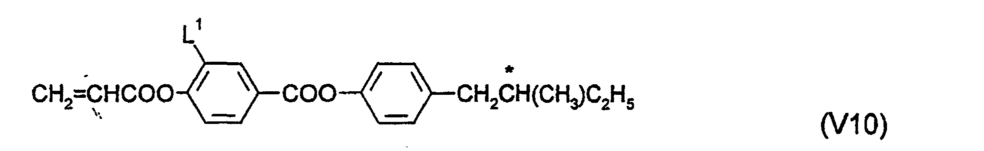

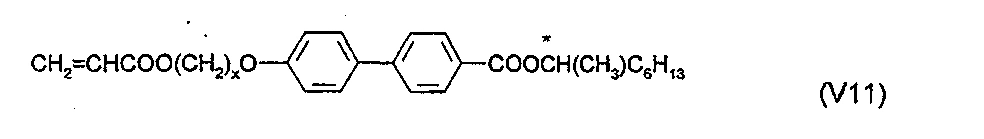

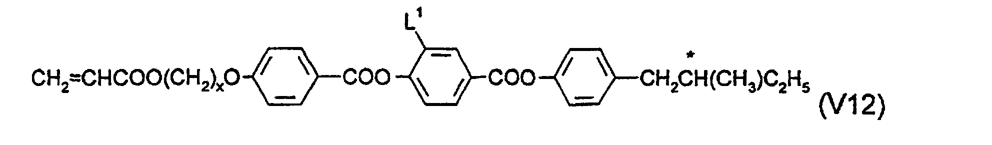

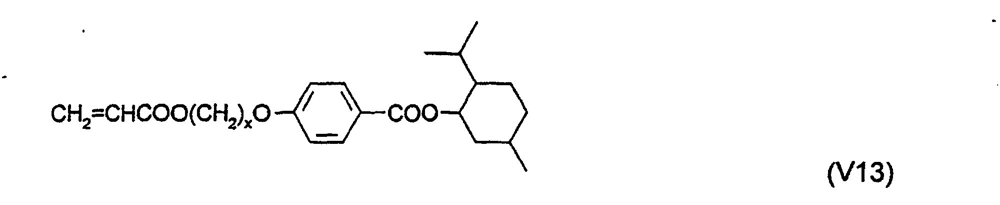

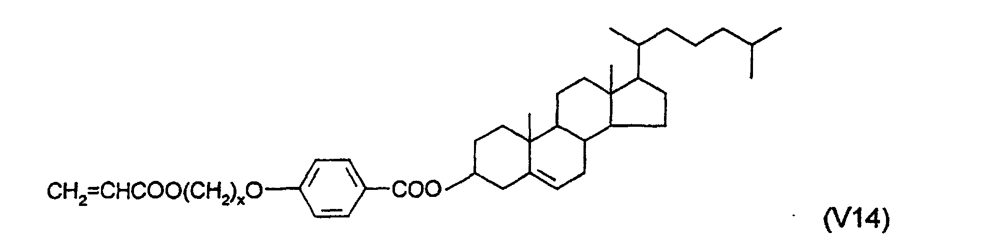

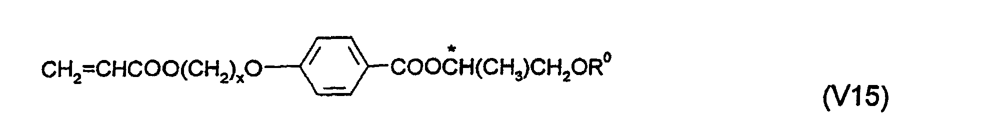

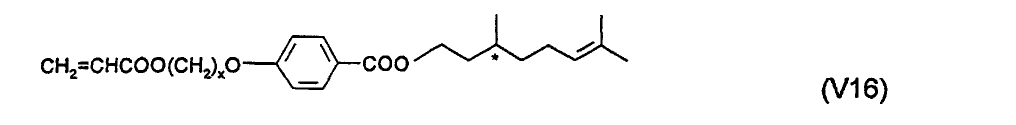

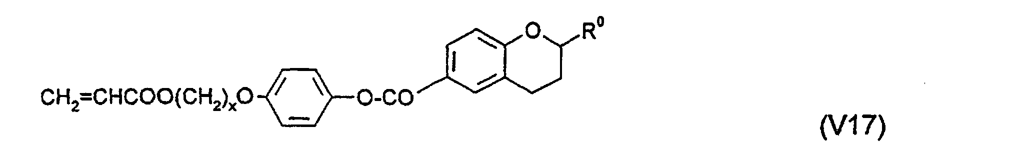

In these compounds x and y are each independently 1 to 12, F is a 1,4-phenylene or 1,4-cyclohexylene group, R⁰ is halogen, cyano or an optionally halogenated alkyl or alkoxy group with 1 to 12 C atoms and L¹ and L² are each independently H, F, Cl, CN, or an optionally halogenated alkyl, alkoxy or alkanoyl group with 1 to 7 C atoms.

The polymerizable mesogenic compounds of formula V can be prepared by methods which are known per se and which are described in standard works of organic chemistry such as, for example, Houben-Weyl, Methoden der organischen Chemie, Thieme-Verlag, Stuttgart. Further methods of their preparation can be taken for example from the above cited WO 93/22397; EP 0 261 712; DE 195,04,224; WO 95/22586 and WO 97/00600.

The polymerizable mesogenic comonomers of formula V can be mono- or bifunctional, i.e. they can comprise one or two polymerizable functional groups.

In a preferred embodiment of the invention the polymerizable mesogenic mixture comprises at least one compound of formula I together with one or more monofunctional compounds of formula V.

In another preferred embodiment of the present invention the polymerizable mesogenic mixture comprises at least one compound of formula I and at least one bifunctional compound of formula V.

It is also possible for the polymerizable mixture to comprise one or more non-polymerizable chiral compounds, which may be mesogenic or non-mesogenic, in addition to the chiral polymerizable compounds of formula I. For example, commercially available dopants, like e.g. R 811 or R 1011 (from Merck KGaA, Germany) can be used for this purpose.

Polymerizable mesogenic mixtures are preferred that comprise 1 to 6, preferably 1 to 3 compounds of formula I.

In a preferred embodiment of the present invention the polymerizable mesogenic mixture comprises 1 to 80 % by weight, preferably 2 to 60 %, in particular 5 to 40 % by weight of one or more compounds of formula I.

The inventive polymerizable liquid crystalline compositions can additionally comprise one or more other suitable components, such as, for example, catalysts, sensitizers, stabilizers, co-reacting monomers or surface-active compounds.

It is also possible, in order to increase crosslinking of the polymers, to add up to 20% of a non mesogenic compound with two or more polymerizable functional groups to the polymerizable composition alternatively or additionally to the multifunctional polymerizable mesogenic compounds.

Typical examples for difunctional non mesogenic monomers are alkyldiacrylates or alkyldimethacrylates with alkyl groups of 1 to 20 C atoms. Typical examples for non mesogenic monomers with more than two polymerizable groups are trimethylpropanetrimethacrylate or pentaerythritoltetraacrylate.

Liquid crystalline polymers can be obtained from the inventive polymerizable compounds and compositions e.g. by solution polymerization or by in-situ polymerization.

For example, solution polymerization can be carried out in a solvent like dichloromethane, tetrahydrofuran or toluene using AIBN as an initiator and heating for 24 hours at 30 to 60 °C.

The in-situ polymerization of polymerizable liquid crystalline compounds is described in detail by D.J.Broer et al., Makromol.Chem. **190**, 2255ff. and 3202ff. (1989).

In another preferred embodiment, inventive oligo- and polymers are prepared by coupling one or more compounds of formula I having a polymerizable group P to an oligo- or polymer backbone.

For example; compounds of formula I, wherein P is denoting a radical with a terminal CH₂=CH- group (vinyl group), can be reacted with linear, crosslinked or cyclic oligo- or polysiloxanes with one or more Si-H bonds in the presence of a catalyst, whereby the CH₂=CH- group is added to the Si-H bond of the siloxane. The preparation of liquid crystalline siloxanes is described e.g. in the EP 0 029 162, EP 0 060 335, EP 0 066 137 or EP 0 358 208, the disclosure of which is incorporated into this application by way of reference.

Particularly preferred are oligo- or polysiloxanes of the following formulae 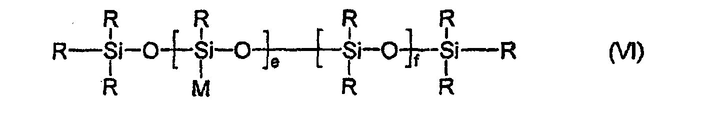 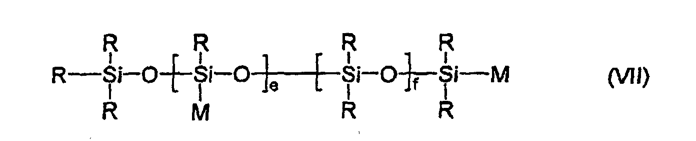 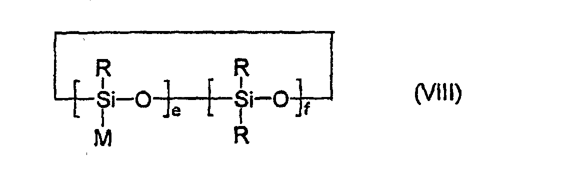 wherein
- R: is, in each case independently, an alkyl group with 1 to 18 C atoms that may be unsubstituted or mono- or polysubstituted with halogen, cyano or nitro groups,
- e: is an integer from 1 to 100,
- f: is an integer from 0 to 100, and
- M: is denoting 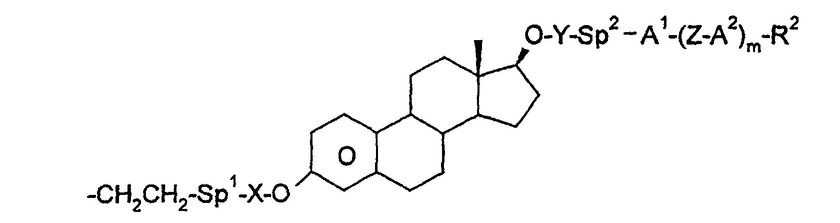
with Sp¹, Sp², X, Y, -A¹-(Z-A²)ₘ- and R² having one of the meanings given above.

R is preferably alkyl, alkoxy or alkenyl with 1 to 12 C atoms. Particularly preferably R has one of the preferred meanings of R¹ given above.

Especially preferred are linear siloxanes of formula (VI), in particular those wherein e+f is from 5 to 60, very preferred those wherein f is 0.

Further preferred are cyclic siloxanes of formula (VIII), in particular those wherein e+f is from 1 to 10, very preferred those wherein f is 0.

The inventive compounds, polymerizable liquid crystalline mixtures compositions and are particularly useful for the preparation of anisotropic polymer films, such as cholesteric polymer films, with uniform molecular orientation.

Thus, another object of the invention is an anisotropic polymer film with an oriented liquid crystalline phase that is obtainable from a polymerizable liquid crystalline mixture comprising at least one polymerizable inventive compound of formula I, or from an inventive oligo- or polymer.

To prepare an anisotropic polymer film with uniform orientation, preferably a layer of an inventive polymerizable liquid crystalline mixture is coated onto a substrate, aligned and polymerized in-situ by exposing them to heat or actinic radiation. Alignment and curing are preferably carried out in the liquid crystal phase of the mixture.

Actinic radiation means irradiation with light, like UV light, IR light or visible light, irradiation with X-rays or gamma rays or irradiation with high energy particles, such as ions or electrons. As a source for actinic radiation for example a single UV lamp or a set of UV lamps can be used. Another possible source for actinic radiation is a laser, like e.g. a UV laser, an IR laser or a visible laser.

When polymerizing by means of UV light, for example a photoinitiator can be used that decomposes under UV irradiation to produce free radicals or ions that start the polymerization reaction.

It is also possible to use a cationic photoinitiator, when curing reactive mesogens with for example vinyl and epoxide reactive groups, that photocures with cations instead of free radicals.

As a photoinitiator for radical polymerization for example the commercially available Irgacure 651, Irgacure 184, Darocure 1173 or Darocure 4205 (all from Ciba Geigy AG) can be used, whereas in case of cationic photopolymerization the commercially available UVI 6974 (Union Carbide) can be used.

Preferably the polymerizable mixture comprises 0.01 to 10 %, in particular 0.05 to 8 %, very preferably 0.1 to 5 % by weight of a photoinitiator, especially preferably a UV-photoinitiator.

In a preferred embodiment of the invention the polymerization of the mixture is carried out under an atmosphere of inert gas, preferably under a nitrogen atmosphere.

As a substrate for example a glass or quarz sheet as well as a plastic film or sheet can be used. It is also possible to put a second substrate on top of the coated mixture prior to, during and/or after polymerization. The substrates can be removed after polymerization or not. When using two substrates in case of curing by actinic radiation, at least one substrate has to be transmissive for the actinic radiation used for the polymerization.

Preferably at least one substrate is a plastic substrate such as for example a film of polyester such as polyethyleneterephthalate (PET), of polyvinylalcohol (PVA), polycarbonate (PC) or triacetylcellulose (TAC), especially preferably a PET film or a TAC film. As a birefringent substrate for example an uniaxially stretched plastic film can be used. For example PET films are commercially available from ICI Corp. under the trade name Melinex.

In a preferred embodiment of the present invention, the inventive polymerizable mixture is coated as a thin layer on a substrate or between substrates and is aligned in its liquid crystal phase to give a uniform orientation.

Uniform orientation can be achieved for example by shearing the mixture, e.g. by means of a doctor blade. It is also possible to apply an alignment layer, for example a layer of rubbed polyimide or sputtered SiOₓ, on top of at least one of the substrates. In some cases, the mixtures orient themselves spontaneously on the substrate, or good alignment is achieved already by the act of coating the mixture.

In another preferred embodiment, a second substrate is put on top of the coated material. In this case, the shearing caused by putting together the two substrates is sufficient to give good alignment.

It is also possible to apply an electric or magnetic field to align the coated mixture.

Alternatively, an inventive anisotropic polymer film with uniform orientation can be obtained by coating a layer of an inventive oligo- or polymer onto a substrate, aligning the coated layer, and optionally crosslinking the oligo- or polymer, wherein all of these steps can be carried out by methods that are known to the expert. For this purpose, preferably the materials and the methods of coating, aligning and curing as describe above are used.

The mesogenic estradiols of formula I, mixtures comprising them or polymers obtainable thereof can be used in liquid crystal displays, such as STN, TN, AMD-TN, temperature compensation, guest-host, phase change or surface stabilized or polymer stabilized cholesteric texture (SSCT, PSCT) displays, in particular in flexoelectric devices, in active and passive optical elements like polarizers, compensators, alignment layers, colour filters or holographic elements, in adhesives, synthetic resins with anisotropic mechanical properties, cosmetics, diagnostics, liquid crystal pigments, for decorative and security applications, in nonlinear optics, optical information storage or as chiral dopants.

The compounds of formula I, and the mixtures and oligo- and polymers obtainable thereof are particularly useful for flexoelectric liquid crystal devices. Thus, another object of the present invention is a flexoelectric device comprising one or more compounds of formula I, or comprising a liquid crystal mixture comprising at least one compound of formula I, or comprising an oligomer or polymer obtained from one or more compounds of formula I.

The inventive mesogenic estradiols of formula I and the mixtures and polymers obtained thereof can be aligned in their cholesteric phase into different states of orientation by methods that are known to the expert, such as surface treatment or electric fields. For example, they can be aligned into the planar (Grandjean) state, into the focal conic state or into the homeotropic state. Inventive mesogenic estradiols of formula I comprising polar groups with a strong dipole moment can further be subjected to flexoelectric switching, and can thus be used in electrooptical switches or liquid crystal displays.

The switching between different states of orientation according to a preferred embodiment of the present invention is exemplarily described below in detail for a sample of an inventive compound of formula I.

According to this preferred embodiment, the sample is placed into a cell comprising two plane-parallel glass plates coated with electrode layers, e.g. ITO layers, and aligned in its cholesteric phase into a planar state wherein the axis of the cholesteric helix is oriented normal to the cell walls. This state is also known as Grandjean state, and the texture of the sample, which is observable e.g. in a polarization microscope, as Grandjean texture. Planar alignment can be achieved e.g. by surface treatment of the cell walls, for example by rubbbing and/or coating with an alignment layer such as polyimide.

A Grandjean state with a high quality of alignment and only few defects can further be achieved by heating the sample to the isotropic phase, subsequently cooling to the chiral nematic phase at a temperature close to the chiral nematic-isotropic phase transition, and rubbing the cell.

In the planar state, the sample shows selective reflection of incident light, with the central wavelength of reflection depending on the helical pitch and the mean refractive index of the material.

When an electric field is applied to the electrodes, for example with a frequency from 10 Hz to 1 kHz, and an amplitude of up to 12 Vᵣₘₛ /µm, the sample is being switched into a homeotropic state where the helix is unwound and the molecules are oriented parallel to the field, i.e. normal to the plane of the electrodes. In the homeotropic state, the sample is transmissive when viewed in normal daylight, and appears black when being put between crossed polarizers.

Upon reduction or removal of the electric field in the homeotropic state, the sample adopts a focal conic texture, where the molecules exhibit a helically twisted structure with the helical axis being oriented perpendicular to the field, i.e. parallel to the plane of the electrodes. A focal conic state can also be achieved by applying only a weak electric field to a sample in its planar state. In the focal conic state the sample is scattering when viewed in normal daylight and appears bright between crossed polarizers.

A sample of an inventive compound in the different states of orientation exhibits different transmission of light. Therefore, the respective state of orientation, as well as its quality of alignment, can be controlled by measuring the light transmission of the sample depending on the strength of the applied electric field. Thereby it is also possible to determine the electric field strength required to achieve specific states of orientation and transitions between these different states.

In a sample of an inventive compound of formula I, the above described focal conic state consists of many disordered birefringent small domains. By applying an electric field greater than the field for nucleation of the focal conic texture, preferably with additional shearing of the cell, a uniformly aligned texture is achieved where the helical axis is parallel to the plane of the electrodes in large, well-aligned areas. In accordance with the literature on state of the art chiral nematic materials, such as P. Rudquist et al., Liq. Cryst. 23 (4), 503 (1997), this texture is also called uniformly-lying helix (ULH) texture. This texture is required to characterize the flexoelectric properties of the inventive compound.

The sequence of textures typically observed in a sample of an inventive compound of formula I on a rubbed polyimide substrate upon increasing or decreasing electric field is given below:

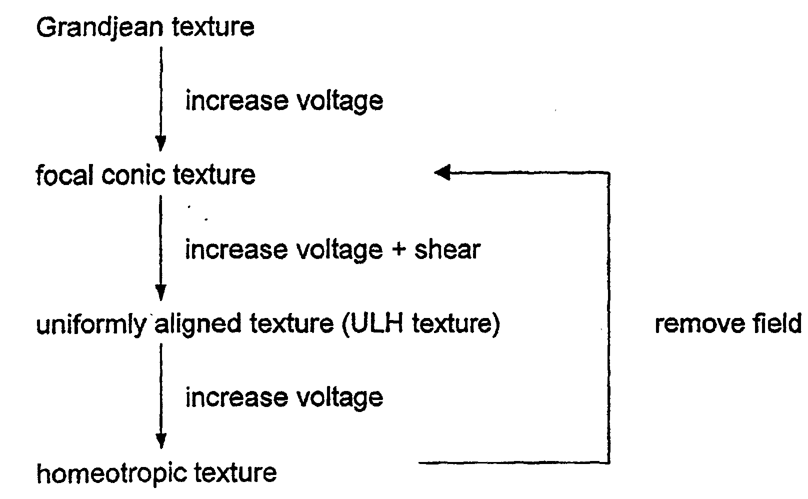

Starting from the ULH texture, inventive flexoelectric compounds, mixtures and polymers can be subjected to flexoelectric switching by application of an electric field. This causes distortion of the optic axis of the material, as shown in Figure 1, which leads to a change in transmission when placing the material between crossed polarizers. The flexoelectric switching of inventive materials is further described in detail in the introduction above and in the examples.

It is also possible to obtain the ULH texture, starting from the focal conic texture, by applying an electric field with a high frequency, of for example 10 kHz, to the sample whilst cooling slowly from the isotropic phase into the cholesteric phase and shearing the cell. The field frequency may differ for different compounds.

Without further elaboration, it is believed that one skilled in the art can, using the preceding description, utilize the present invention to ist fullest extent. The following examples are, therefore, to be construed as merely illustrative and not limitative of the remainder of the disclosure in any way whatsoever.

In the foregoing and in the following examples, unless otherwise indicated, all temperatures are set forth uncorrected in degrees Celsius and all parts and percentages are by weight.

The following abbreviations are used to illustrate the liquid crystalline phase behaviour of the compounds: G = glassy; K = crystalline; N = nematic; S_{A} = smectic A; S_{A*} = smectic A phase of a chiral compound; S_{C*} = chiral smectic C; Ch = cholesteric; LC = unidentified liquid crystal phase; I = isotropic. The numbers between these symbols indicate the phase transition temperatures in degree Celsius.

Furthermore, Δn is the birefringence at 589 nm and 20 °C and Δε is the dielectric anisotropy at 20 °C.

### Example 1

The compounds of formula (1) were prepared according to the following reaction scheme

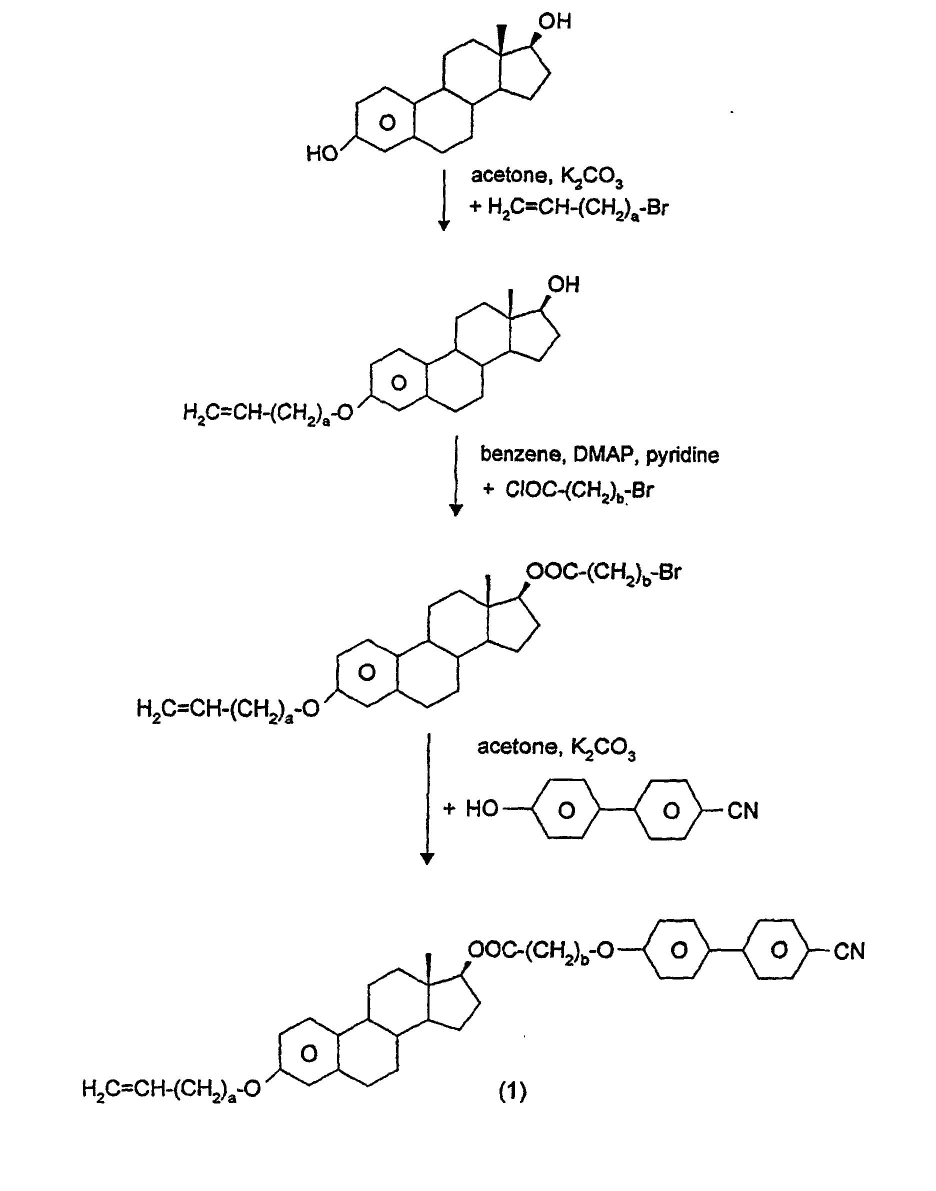

The properties of compounds of formula (1) are depicted in table 1.

**Table 1**

| Properties of compounds of formula (1) | | | | |
|---|---|---|---|---|
| No. | a | b | LC phase behaviour | pitch length³⁾[nm] (T-T_{C} [°C]) |
| 1a | 3 | 10 | K71 Ch 87 l ¹⁾ | 210 (-5) |
| 1b | 9 | 10 | K 42 Ch 82 l ¹⁾ | 286 (-10) |
| 1c | 3 | 4 | K 91 Ch 105 l ¹⁾ | 320 (-4) |
| 1d | 9 | 4 | K 68 Ch 95 l ¹⁾ | 595 (-5) |
| 1e | 4 | 10 | K 55 Ch 81 l ²⁾ | 196 (-20) |
| 1f | 4 | 4 | K 61 Ch 96 l ¹⁾ | 312 (-5) |
| 1g | 4 | 5 | K 65 l ¹⁾ | - |
| 1h | 3 | 5 | K 105 (Ch 83) l ¹⁾ | < 200 |
| 1i | 3 | 7 | K 112 (Ch 84) l ²⁾ | < 200 |

| | | | | |
|---|---|---|---|---|
| ¹⁾ obtained by DSC measurement | | | | |
| ²⁾ obtained by microscopy | | | | |
| ³⁾ pitch length of the cholesteric helix, measured by the Cano wedge method, the numbers in brackets indicate the reduced temperature T - T_{C} in °C (T_{C} = clearing temperature, T = measurement temperature) | | | | |

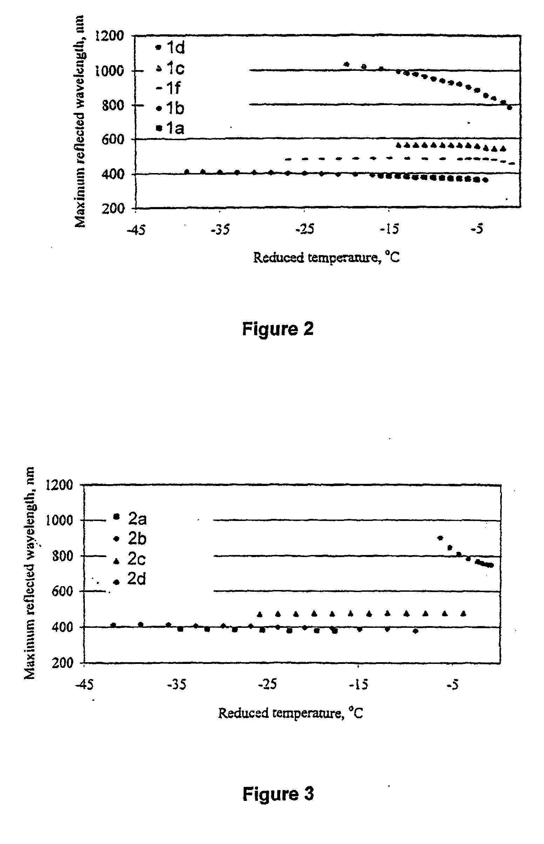

Figure 2 depicts the maximum selectively reflected wavelength of compounds 1a, 1b, 1c, 1d and 1f versus reduced temperature T - T_{C}.

### Example 2

The compounds of formula (2) were obtained by hydrogenation of the corresponding compounds of formula (1) according to known methods.

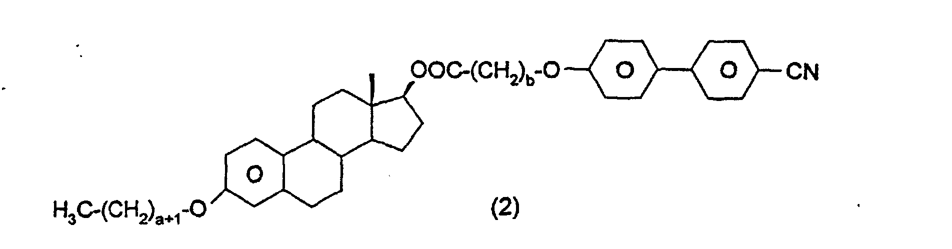

The properties of compounds of formula (2) are depicted in table 2.

**Table 2**

| Properties of compounds of formula (2) | | | | |
|---|---|---|---|---|
| No. | a | b | LC phase behaviour ²⁾ | pitch length³)[nm] (T-T_{C} [°C]) |
| 2a | 3 | 10 | K 48 Ch 86 l | 247 (-5) |
| 2b | 9 | 10 | K 40 Ch 85 l | 239 (-5) |
| 2c | 3 | 4 | K 76 Ch 103 l | 390 (-5) |
| 2d | 9 | 4 | K 77 S_{A} 91 Ch 98 l | 648 (-4) |
| 2e | 4 | 10 | K 45 Ch 91 l | 234 (-30) |

| | | | | |
|---|---|---|---|---|
| ²⁾ obtained by microscopy | | | | |
| ³⁾ pitch length of the cholesteric helix, measured by the Cano wedge method, the numbers in brackets indicate indicate the reduced temperature T - T_{C} in °C (T_{C} = clearing temperature, T = measurement temperature) | | | | |

Figure 3 depicts the maximum selectively reflected wavelength of compounds 2a, 2b, 2c and 2d versus the reduced temperature T - T_{C} in °C.

### Example 3

The cyclic oligosiloxanes of formula (3) were obtained from the compounds of example 1 by addition of the vinyl group to the Si-H bonds of a cyclic oligomethylhydrogensiloxane.

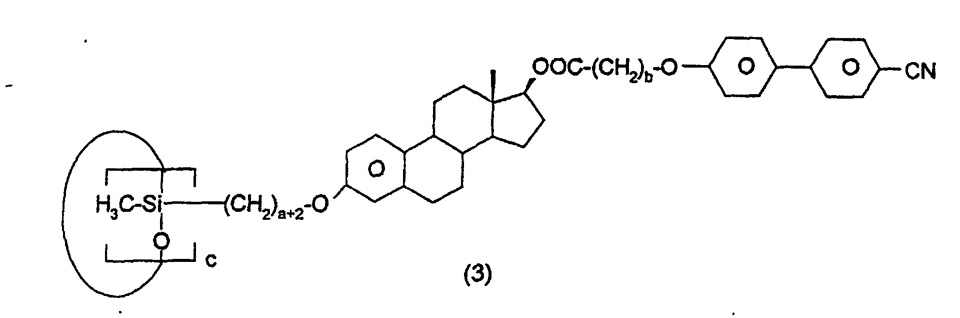

The properties of compounds of formula (3) are depicted in table 3.

**Table 3**

| Properties of compounds of formula (3) | | | | | |
|---|---|---|---|---|---|
| No. | a | b | c | LC phase behaviour ²⁾ | pitch length (nm) ³⁾ |
| 3a | 3 | 10 | 4 | G 56 S_{A∗}81 Ch 102 l | < 200 |
| 3b | 9 | 10 | 4 | G 65 S_{A∗} 105 l | |
| 3c | 3 | 4 | 4 | G 80 S_{A∗} 134 l | |
| 3d | 9 | 4 | 4 | K 68 S_{A∗} 105 l | |
| 3e | 3 | 10 | 5 | G 68 LC 116 l | |
| 3f | 9 | 10 | 5 | G 63 LC 134 l | |
| 3g | 3 | 4 | 5 | G 74 LC 160 l | |
| 3h | 9 | 4 | 5 | K 78 LC 180 l | |

| | | | | | |
|---|---|---|---|---|---|
| ²⁾ obtained by microscopy | | | | | |
| ³⁾ pitch length of the cholesteric helix, measured by the Cano wedge method | | | | | |

### Example 4

The linear polysiloxanes of formula (4) were obtained from the compounds of example 1 by addition of the vinyl group to the Si-H bonds of a linear polymethylhydrogensiloxane.

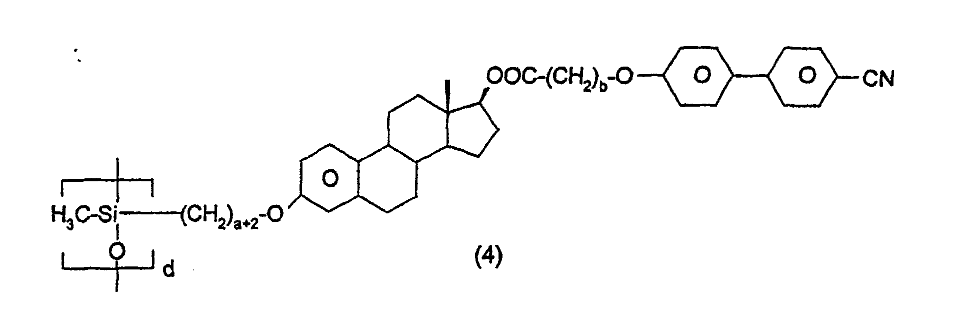

The properties of polymers of formula (4) are depicted in table 4.

**Table 4**

| Properties of polymers of formula (4) | | | | |
|---|---|---|---|---|
| No. | a | b | d | LC phase behaviour ²⁾ |
| 4a | 3 | 10 | 22 | G 69 S_{C∗} 88 S_{A∗} 125 l |
| 4b | 9 | 10 | 22 | G 46 LC 126 l |
| 4c | 3 | 4 | 22 | G 55 LC 143 l |
| 4d | 9 | 4 | 22 | K 68 LC 180 l |

| | | | | |
|---|---|---|---|---|
| ²⁾ obtained by microscopy | | | | |

### Example 5

The compound 1e of example 1 was dissolved at a concentration of 65 % by weight in the nematic liquid crystal host mixture BL 109, to give the mixture 5a exhibiting the phase behaviour K 27 Ch 89 I and showing selective reflection of red light.

The host mixture BL 109 is commercially available from Merck Ltd., Southampton, UK and exhibits the following properties: N 71 I, Δn 0.187, Δε - 3.9.

The compound 1d of example 1 was mixed in different concentrations with the commercially available nematic liquid crystal compound 6CB of the formula 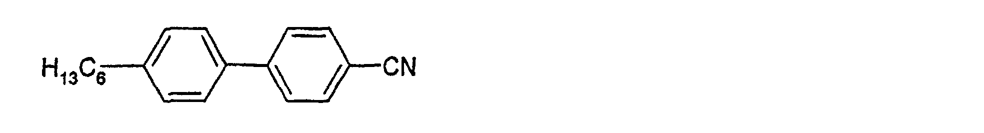 to give the mixtures 5b and 5c with the properties shown in table 5.

**Table 5**

| Properties of mixtures 5b and 5c | | |
|---|---|---|
| No. | weight % of 1d | LC phase behaviour |
| 5b | 10 | K 9.4 Ch 28.8 l |
| 5c | 50 | K < 20 Ch 59 l |

Both mixtures 5b and 5c exhibit a long helical pitch with selective reflection in the infrared region of light.

### Use Example 1A

A sample of compound 1c of example 1 was filled into a cell consisting of two plane-parallel glass plates coated with ITO electrode layers and a polyimide alignment layer, and being held apart at a distance of about 4 µm by spacers.

The sample cell was then put between two crossed polarizers, an electric field (square wave) with a frequency of 1 kHz was applied to the cell, and the change of transmission was measured using a photodiode. The texture change was observed using a polarizing microscope.

The compound 1c at a field of about 1.6 V/ µm⁻¹ changes from the initially adopted (bright) Grandjean texture into a (scattering) focal conic texture, with a sudden decrease of the transmission, followed by gradually unwinding of the helix, which causes a steady increase of the transmission.

At a field of 5.65 Vµm⁻¹, which is called the 'critical field', the sample changes from the focal conic into the (bright) homeotropic state.

The critical field for transition from focal conic to homeotropic state was determined in the way as described above for the compounds and mixtures of examples 1-5. The results are depicted in table 6.

**Table 6**

| Critical fields of compounds and mixtures of example 1-5 | | | |
|---|---|---|---|
| No. | critical field (Vµm⁻¹) | No. | critical field (Vµm⁻¹) |
| 1a | 11.05 | 2a | 11.18 |
| 1b | 14.50 | 2c | 7.87 |
| 1c | 5.65 | 3a | 35 |
| 1d | 4.32 | 5a | 9.03 |
| 1e | 12.21 | 5b | 0.9 |
| 1f | 7.36 | 5c | 3.5 |

### Use Example 1B

A sample of compound 1a was prepared as described in use example 1A. Square wave electric fields of 80 Hz frequency and different amplitude were applied to the sample, thus the material was subjected to an alternately-poled DC field of 6.25 ms duration. The field was lower than the critical field for compound 1a, so that the compound was in the focal conic state.

The electric field caused flexoelectric switching in the compound 1a, with the optic axis of the material being tilted at an angle φ relative to the plane of the layer. The tilt angle was evaluated by holding the sample between crossed polarizers and measuring the half angle between the two extinction positions.

The response time of the flexoelectric switching of compound 1a was determined at different temperatures. The response time herein is defined as the time elapsed between a change of polarity of the applied field and the responding photodiode signal changing by 90 % of its peak to peak amplitude.

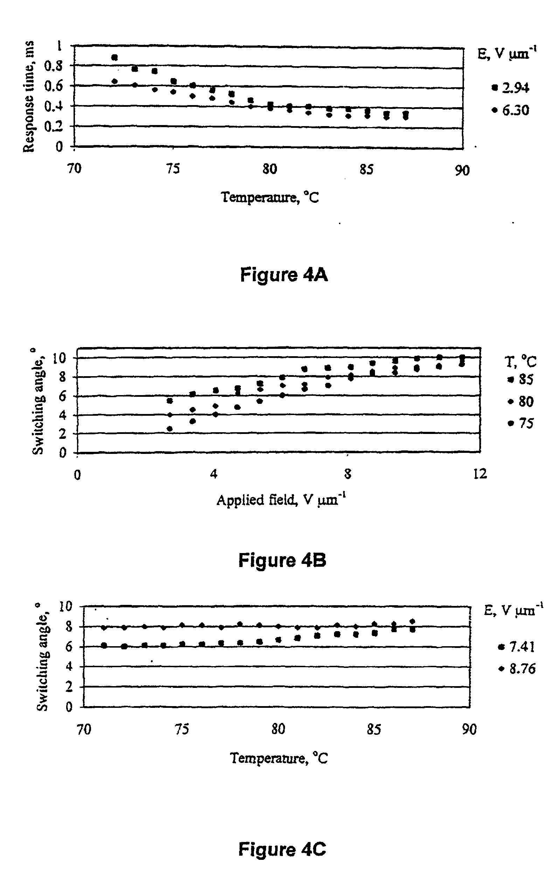

Figure 4A shows the response time of compound 1 a versus temperature at different electric fields (E). It can be seen that the response time is in the range of 200 to 900 µs and decreases strongly with increasing temperature.

The induced tilt angle φ of compound 1a was measured at different amplitudes of the applied electric field E and different temperatures. The results are shown in Figure 4B and 4C. It can be seen that the tilt angle increases with increasing field.

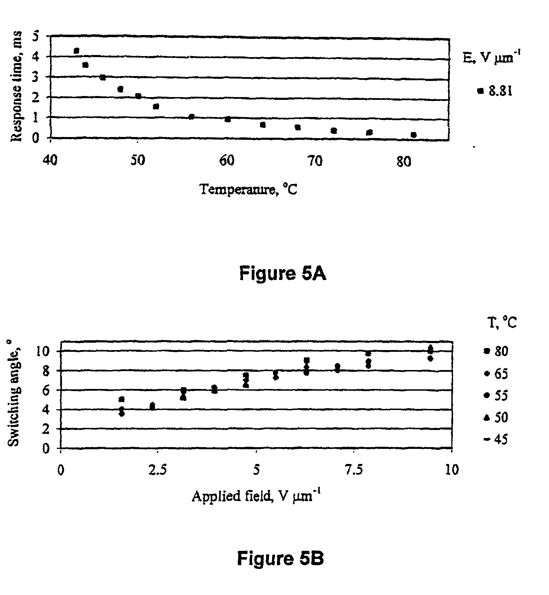

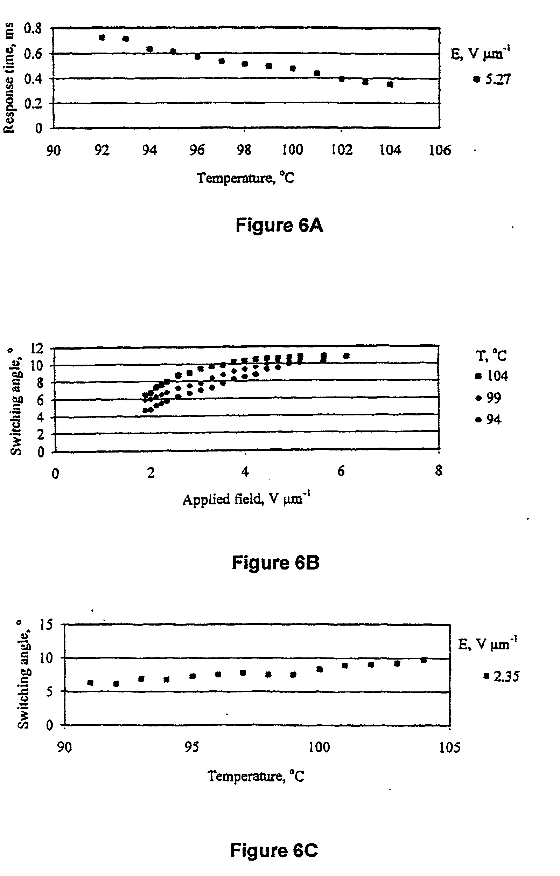

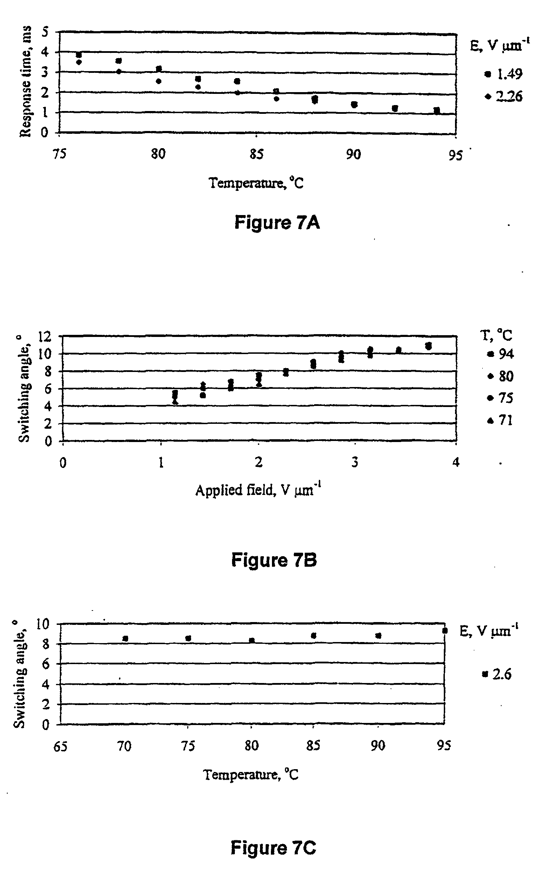

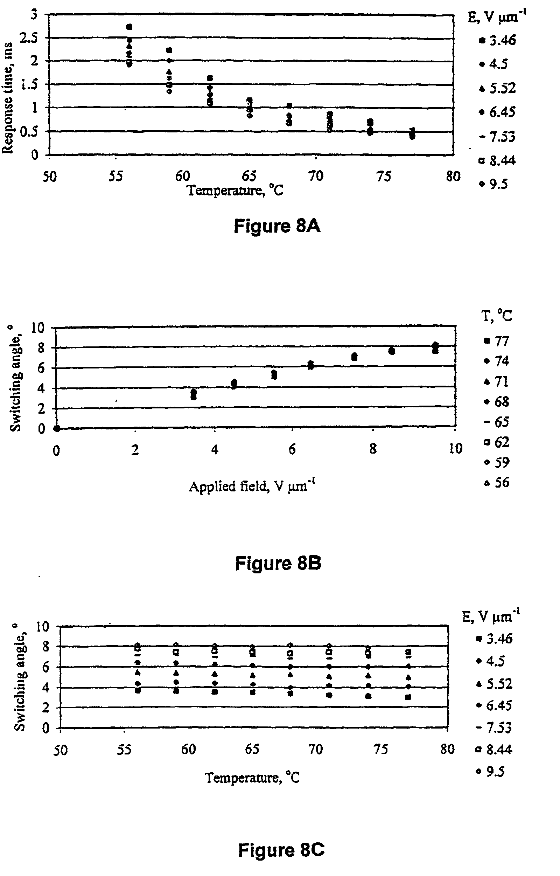

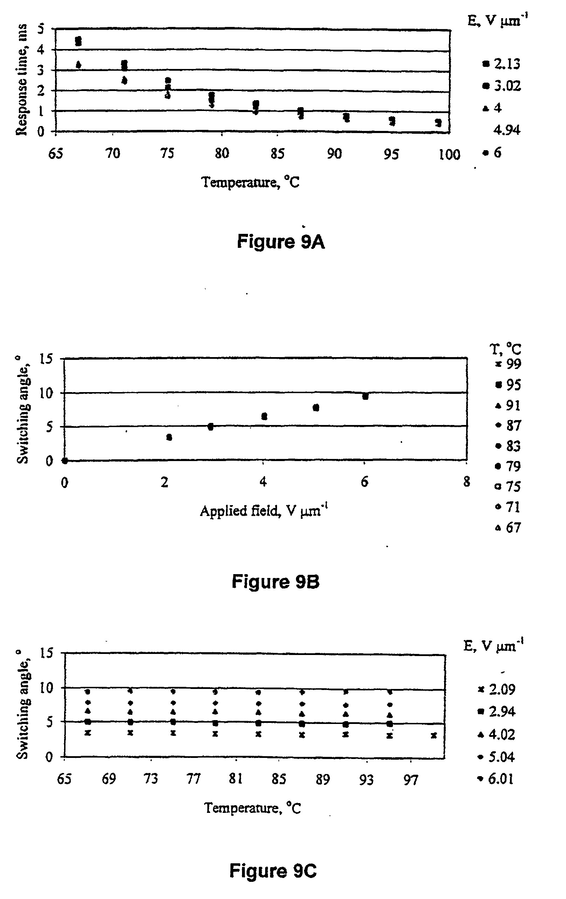

The above measurements were repeated for compounds 1b, 1c, 1d, 1e and 1f. The results are depicted in Figures 5, 6, 7, 8 and 9, respectively. Of these, Figures 5A, 6A, 7A, 8A and 9A depict the response time versus temperature at different electric fields E, whereas Figures 5B, 6B,C, 7B,C, 8B,C, and 9B,C depict the induced tilt angle at different electric fields E and temperatures. The tilt angle increases with increasing field, whereas in most samples the tilt angle is not very dependent on the temperature.

### Use Example 1C

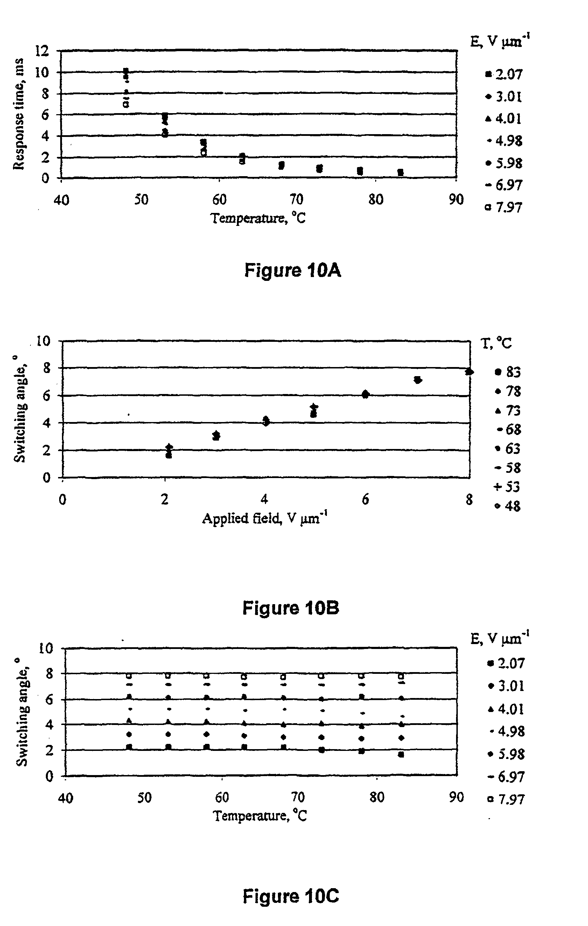

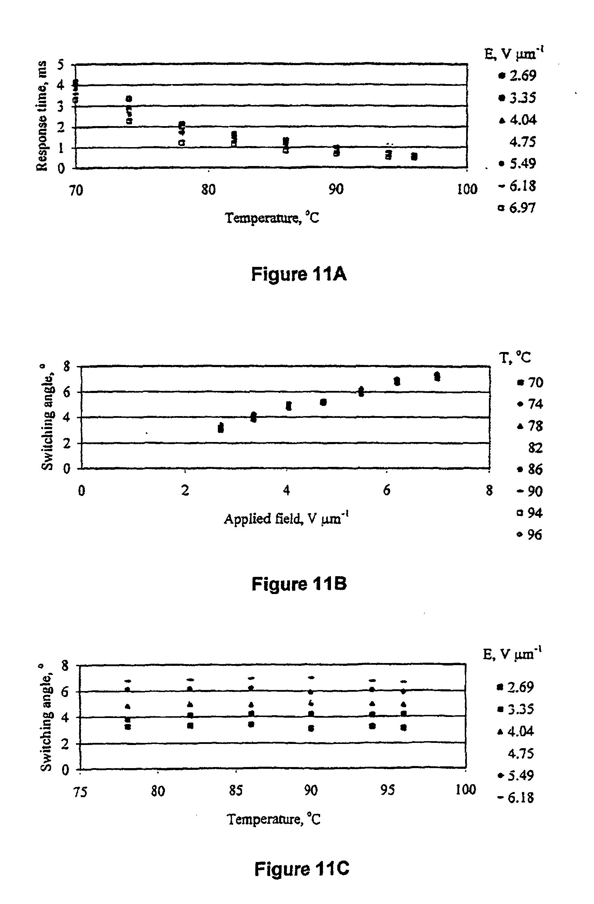

The response time and induced tilt angle of flexoelectric switching of compounds 2a and 2c of example 2 were measured at different electric fields E and temperatures as described in use example 1B. The results are depicted in Figures 10A-C and 11A-C, respectively. The tilt angle increases with increasing field, but is not very dependent on the temperature.

### Use Example 1D

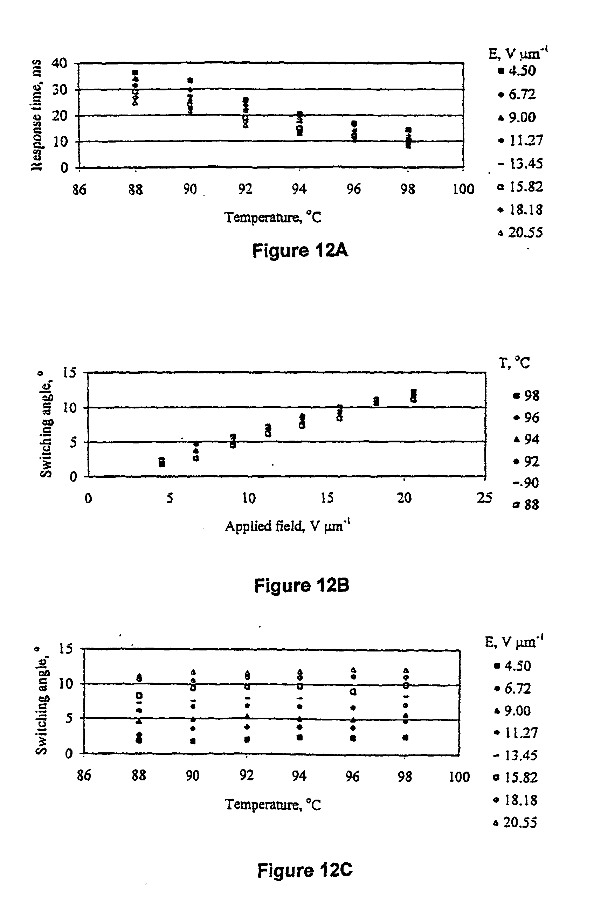

The response time and induced tilt angle of flexoelectric switching of the oligocyclosiloxane 3a of example 3 were measured at different electric fields E and temperatures as described in use example 1B. The results are depicted in Figures 12A-C. The tilt angle increases with increasing field, but is not very dependent on the temperature.

### Use Example 1E

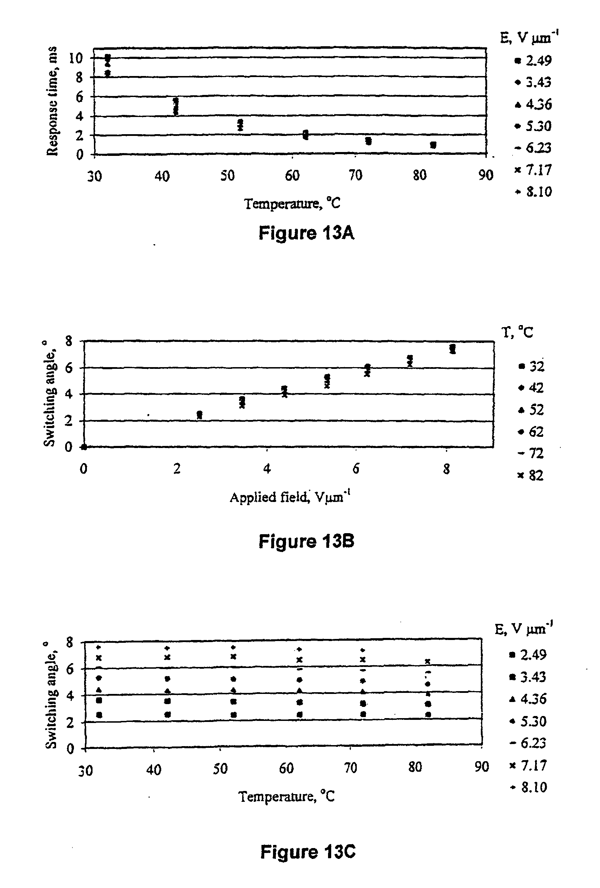

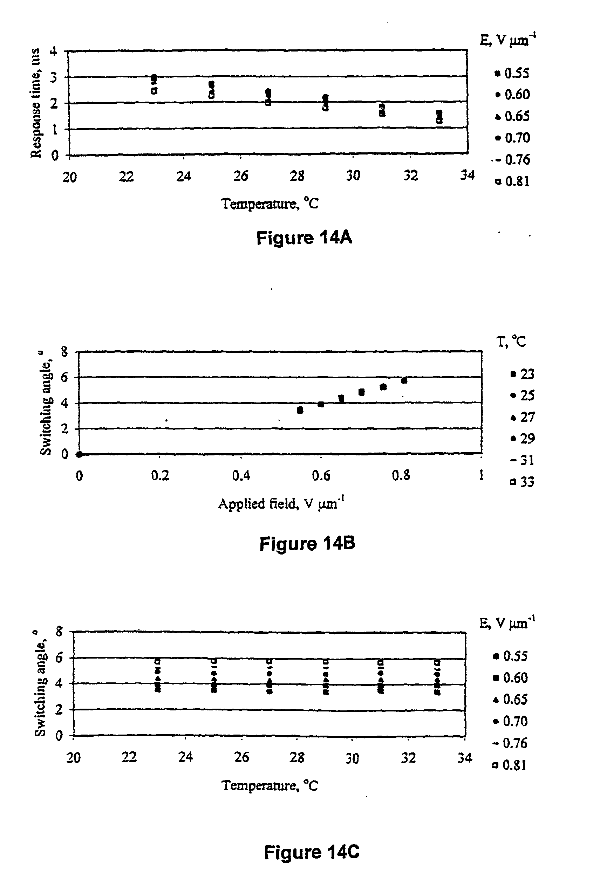

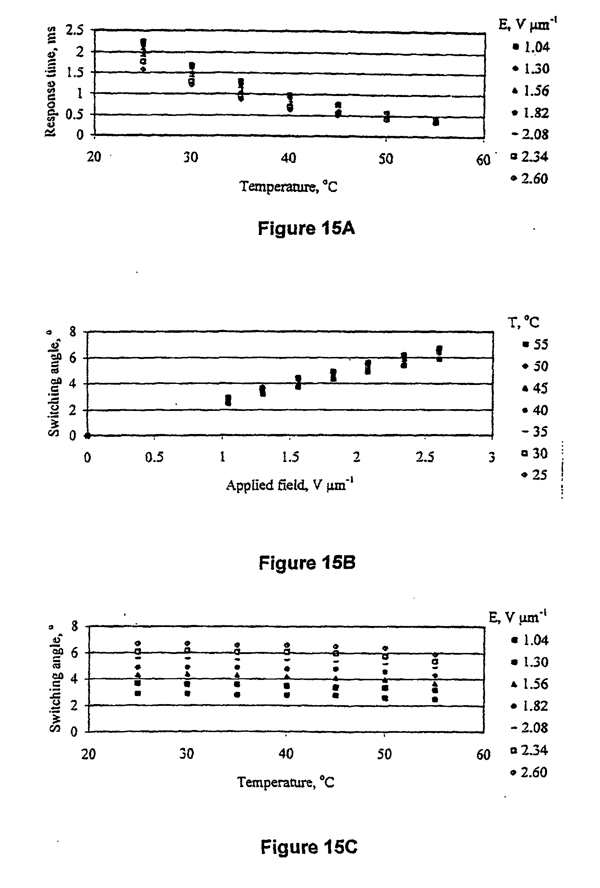

The response time and induced tilt angle of flexoelectric switching of the mixtures 5a, 5b and 5c of example 5 were measured at different electric fields E and temperatures as described in use example 1B. The results are depicted in Figures 13A-C, 14A-C and 15A-C, respectively. The tilt angle increases with increasing field, but is not very dependent on the temperature.

The preceding examples can be repeated with similar success by substituting the generically or specifically described reactants. and/or operating conditions of this invention for those used in the preceding examples.

## Claims

1. Mesogenic estradiols of formula I 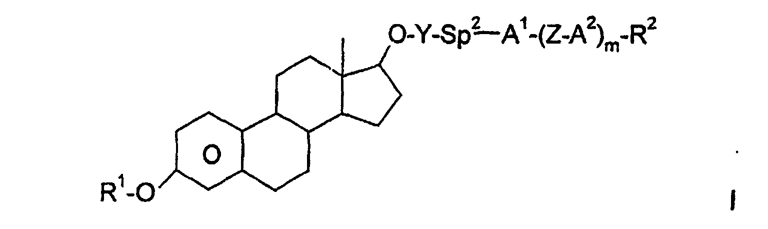 wherein
R¹ is an alkyl group with 1 to 12 C atoms, wherein one or more non-adjacent CH₂ groups may replaced by -O-, -CH=CH-, -CO-, -OCO- or -COO- such that O-atoms are not directly linked to each other, or is denoting P-Sp¹-X-,
P is a polymerizable group,
Sp¹ and Sp² are each independently denoting a spacer group with up to 20 C atoms or a single bond,
X and Y are each independently -CO-, -CS-, -OCO-, -COO- or a single bond,
A¹ and A² are each independently 1,4-phenylene in which, in addition, one or more CH groups may be replaced by N, 1,4-cyclohexylene in which, in addition, one or two non-adjacent CH₂ groups may be replaced by O and/or S, 1,4-cyclohexenylene, 1,4-bicyclo(2,2,2) octylene, piperidine-1,4-diyl, naphthalene-2,6-diyl, decahydronaphthalene-2,6-diyl, or 1,2,3,4-tetrahydronaphthalene-2,6-diyl, it being possible for all these groups to be unsubstituted, mono- or polysubstituted with halogen, cyano or nitro groups or alkyl, alkoxy or alkanoyl groups having 1 to 7 C atoms wherein one or more H atoms may be substituted by F or Cl,
Z is in each case independently -COO-, -OCO-, -CH₂CH₂-, -OCH₂-, -CH₂O-, -CH=CH-, -N=N-, -CH=CH-COO-, -OCO-CH=CH-, -C≡C- or a single bond,
m is 0, 1 or 2, and
R is F, Cl, CN, NO₂ or a polar straight chain or branched alkyl or alkoxy group with up to 12 C atoms which is optionally mono- or polysubstituted by F, Cl and/or CN.

2. Mesogenic estradiol according to claim 1, **characterized in that** the group A¹-(Z-A²-)ₘ- is selected from the following formulae 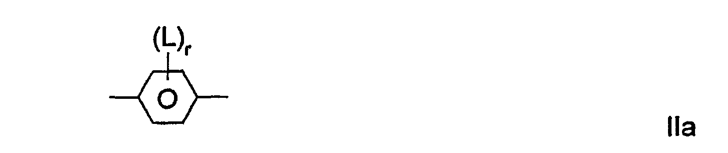 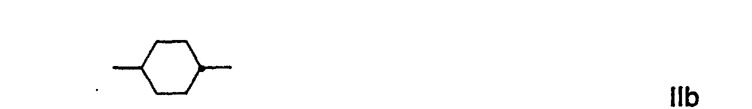 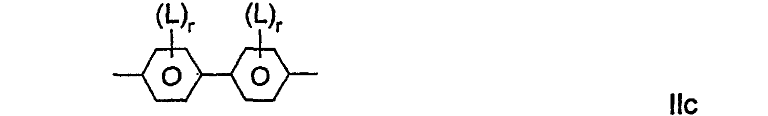 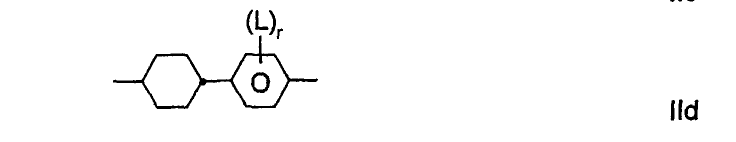 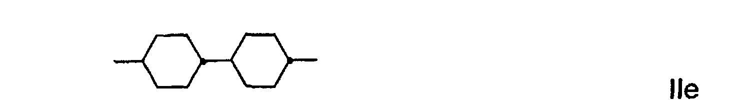 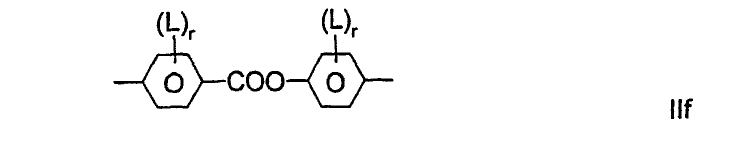 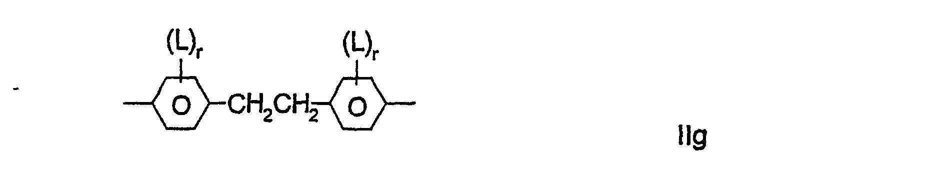 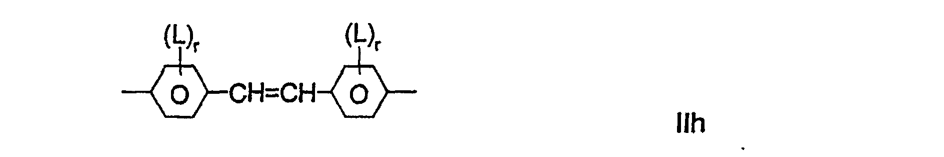 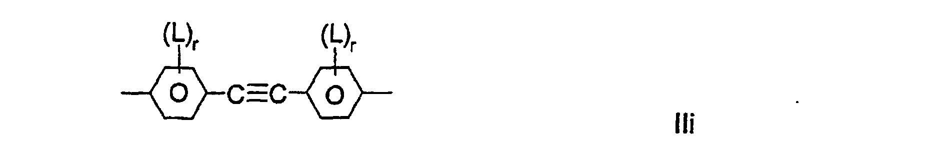 wherein L in each case independently denotes halogen, a cyano or nitro group or an alkyl, alkoxy or alkanoyl group having 1 to 7 C atoms, wherein one or more H atoms may be substituted by F or Cl, and r is 0, 1 or 2.

3. Mesogenic estradiol according to at least one of claims 1 and 2, **characterized in that** Y is -CO- and Sp² is alkylene with 1 to 12 C atoms.

4. Mesogenic estradiol according to at least one of claims 1 to 3, **characterized in that** R² is F, Cl, CN, NO₂, CF₃, OCF₃, OCHF₂ or OC₂F₅.

5. Mesogenic estradiol according to at least one of claims 1 to 4, **characterized in that** R¹ is denoting P-Sp¹-X-.

6. Mesogenic estradiol according to claim 5, **characterized in that** P is denoting acryl, methacryl, vinyl, vinyloxy, epoxy or styrene.

7. Mesogenic estradiol according to claim 6, **characterized in that** P is denoting a vinyl group.

8. Mesogenic estradiol according to at least one of claims 1 to 7, **characterized in that** X is a single bond, Y is -CO-, Sp² is alkylene with 1 to 12 C atoms and Sp¹ is alkylene with up to 12 C atoms or a single bond.

9. Liquid crystalline mixture comprising at least one mesogenic estradiol according to at least one of claims 1 to 8.

10. Liquid crystalline mixture according to claim 9, **characterized in that** it comprises 5 to 90 % by weight of said at least one mesogenic estradiol.

11. Polymerizable liquid crystalline mixture, **characterized in that** it comprises at least two polymerizable compounds, at least one of which is a mesogenic estradiol according to at least one of claims 5 to 8.

12. Polymerizable liquid crystalline mixture according to claim 11, **characterized in that** it comprises 1 to 80 % by weight of said at least one mesogenic estradiol.

13. Polymerizable liquid crystalline mixture according to claim 11 or 12, **characterized in that** it comprises one or more polymerizable compounds selected of formula V
P-(Sp-X)ₙ-(A¹-Z¹)ₘ-A²-R⁵ (V)
wherein P, Sp, X, n, A¹ and A² have the meaning of formula I, m is 0, 1 or 2, Z¹ has one of the meanings of Z in formula I, and R⁵ has one of the meanings of R¹ or R² in formula I.

14. Polymerizable liquid crystalline mixture according to at least one of claims 11 to 13, **characterized in that** it comprises one or more polymerizable compounds selected of the following formulae 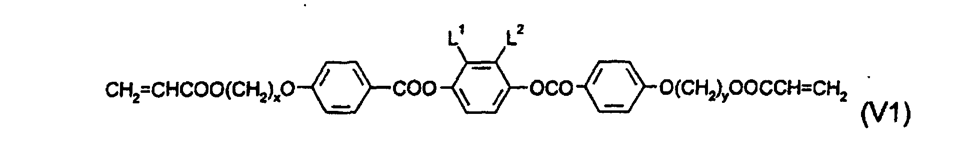 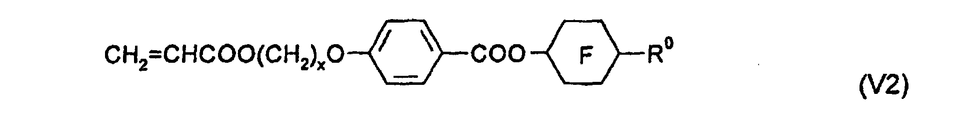 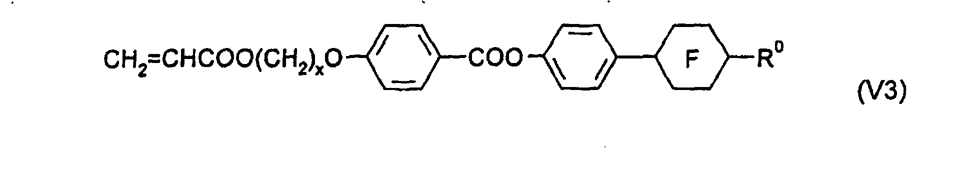 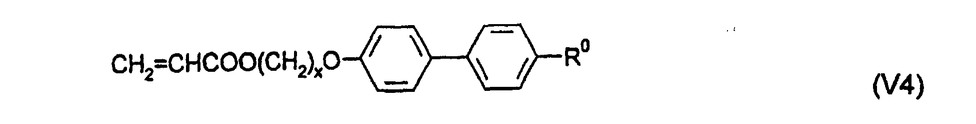 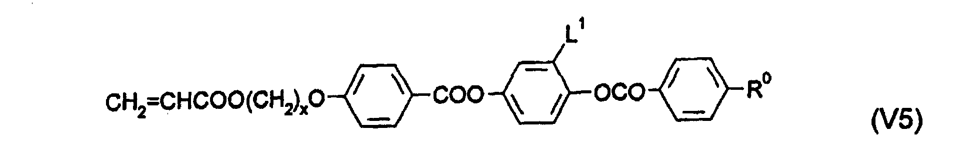 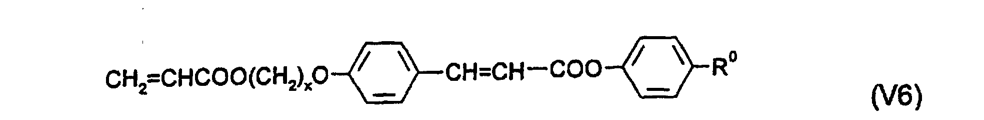 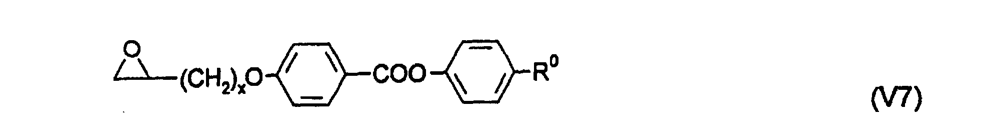 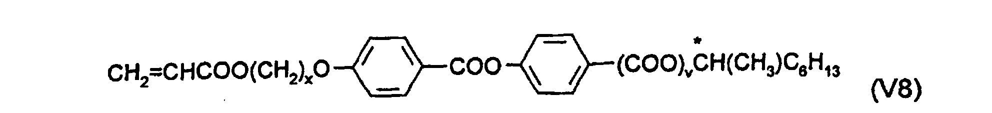 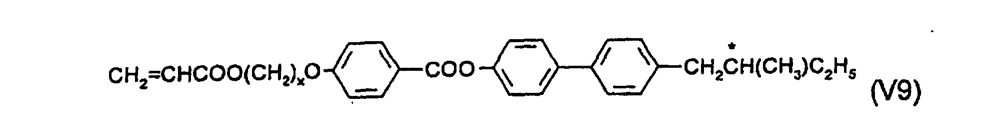 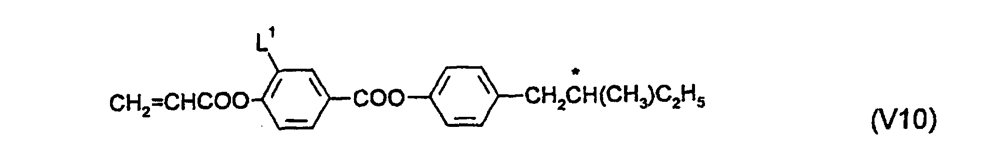 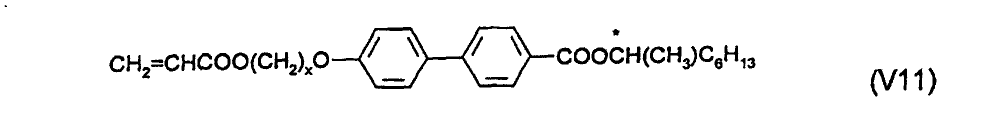 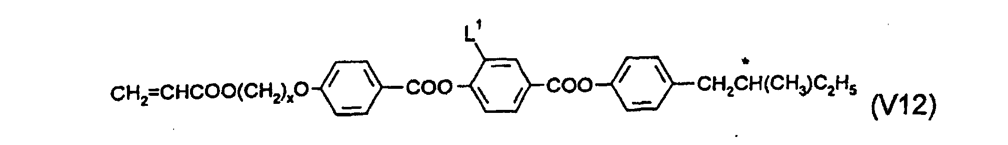 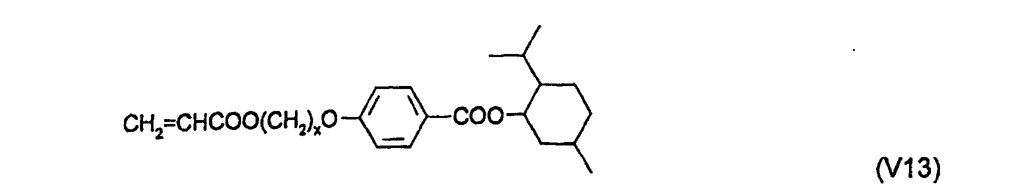 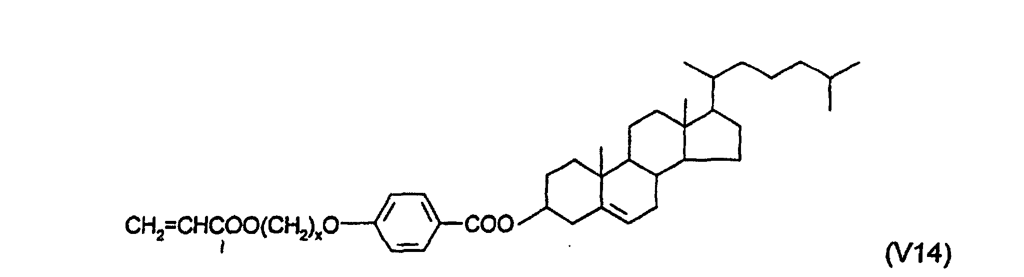 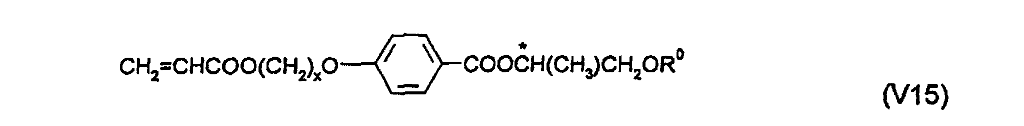 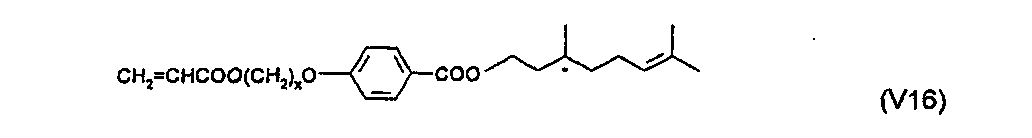 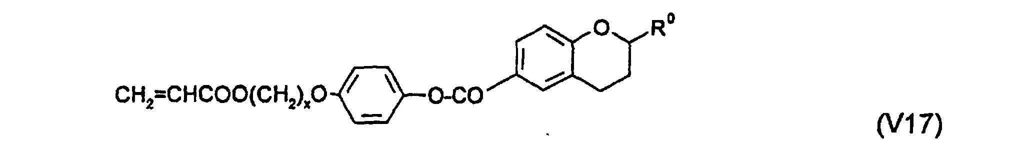 wherein x and y are each independently 1 to 12, F is a 1,4-phenylene or 1,4-cyclohexylene group, R⁰ is halogen, cyano or an optionally halogenated alkyl or alkoxy group with 1 to 12 C atoms and L¹ and L² are each independently H, F, Cl, CN, or an optionally halogenated alkyl, alkoxy or alkanoyl group with 1 to 7 C atoms.

15. Chiral linear, cyclic or crosslinked anisotropic oligomer or polymer obtainable by polymerizing one or more polymerizable mesogenic estradiol compounds according to any of claims 5 to 8, a liquid crystalline mixture according to claim 9 or 10 comprising at least one polymerizable mesogenic estradiol according to at least one of claims 5 to 8, a polymerizable liquid crystalline mixture according to at least one of claims 11 to 14, or by coupling said estradiol compounds or mixtures to an oligomer or polymer backbone.

16. Oligo- or polysiloxanes according to claim 15, **characterized in that** they are selected of the following formulae 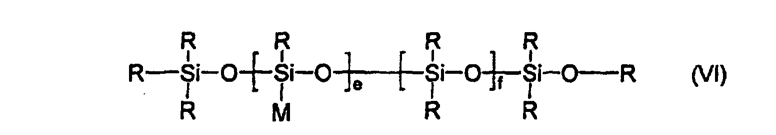 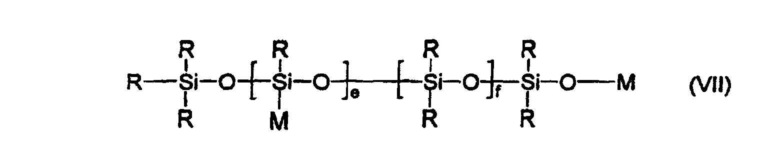 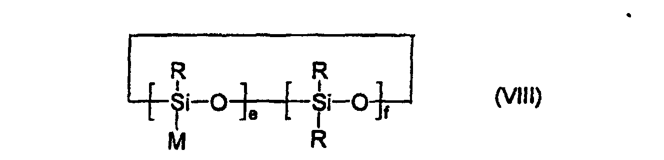 wherein
R is, in each case independently of one another, an alkyl group with 1 to 18 C atoms that may be unsubstituted or mono- or polysubstituted with halogen, cyano or nitro groups,
e is an integer from 1 to 100,
f is an integer from 0 to 100, and
M is denoting 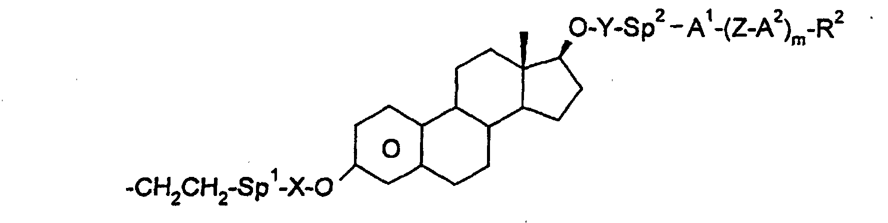
with Sp¹, Sp², X, Y, -A¹-(Z-A²)ₘ- and R² having one of the meanings given in any of claims 1 to 8.

17. Use of a mesogenic estradiol according to at least one of claims 1 to 8, a mixture according to at least one of claims 9 to 14, or an oligomer or polymer according to claim 15 or 16 in liquid crystal displays, such as STN, TN, AMD-TN, temperature compensation, guest-host, phase change or surface stabilized or polymer stabilized cholesteric texture (SSCT, PSCT) displays or flexoelectric display devices, in active and passive optical elements like polarizers, compensators, alignment layers, colour filters or holographic elements, in adhesives, synthetic resins with anisotropic mechanical properties, cosmetics, diagnostics, liquid crystal pigments, for decorative and security applications, in nonlinear optics, optical information storage or as chiral dopants.

18. Flexoelectric liquid crystal device comprising a mesogenic estradiol according to at least one of claims 1 to 8, a liquid crystal mixture according to at least one of claims 9 to 14, or a linear, cyclic or crosslinked anisotropic oligo- or polymer according to claim 15 or 16.

## Patentansprüche

1. Mesogene Estradiole der Formel I 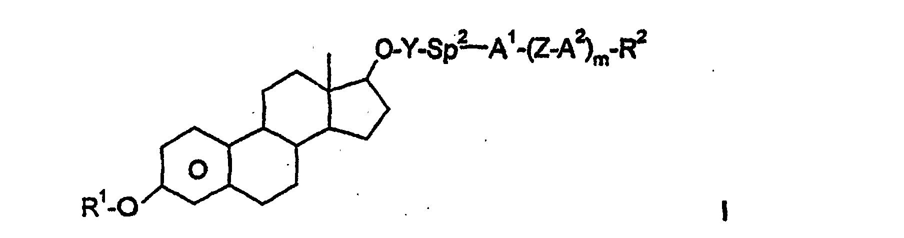 worin
R¹ eine Alkylgruppe mit 1 bis 12 C-Atomen bedeutet, in der eine oder mehrere nicht benachbarte CH₂-Gruppen durch -O-, -CH=CH-, -CO-, -OCO- oder -COO- so ersetzt sein können, dass O-Atome nicht direkt miteinander verknüpft sind, oder P-Sp¹-X- bedeutet,
P eine polymerisierbare Gruppe bedeutet,
Sp¹ und Sp² jeweils unabhängig eine Spacergruppe mit bis zu 20 C -Atomen oder eine Einfachbindung bedeuten,
X und Y jeweils unabhängig -CO-, -CS-, -OCO-, -COO- oder eine Einfachbindung bedeuten,
A¹ und A² jeweils unabhängig 1,4-Phenylen, in dem auch eine oder mehrere CH-Gruppen durch N ersetzt sein können, 1,4-Cyclohexylen, in dem auch eine oder zwei nicht benach-barte CH₂-Gruppen durch O und/oder S ersetzt sein können, 1,4-Cyclohexenylen, 1,4-Bicyclo-(2,2,2)-octylen, Piperidin-1,4-diyl, Naphthalin-2,6-diyl, Decahydronaphthalin-2,6-diyl oder 1,2,3,4-Tetrahydronaphthalin-2,6-diyl bedeuten, wobei alle diese Gruppen unsubstituiert oder ein- oder mehrfach durch Halogen, Cyan- oder Nitro-gruppen oder Alkyl-, Alkoxy- oder Alkanoylgruppen mit 1 bis 7 C-Atomen substituiert sein können, in denen ein oder mehrere H-Atome durch F oder Cl substituiert sein können,
Z jeweils unabhängig -COO-, -OCO-, -CH₂CH₂-, -OCH₂-, -CH₂O-, -CH=CH-, -N=N-, -CH=CH-COO-, -OCO-CH=CH-, -C≡C- oder eine Einfachbindung bedeutet,
m 0, 1 oder 2 ist und
R² F, Cl, CN, NO₂ oder eine polare geradkettige oder verzweigte gegebenenfalls ein- oder mehrfach durch F, Cl und/oder CN substituierte Alkyl- oder Alkoxygruppe mit bis zu 12 C-Atomen bedeutet.

2. Mesogenes Estradiol nach Anspruch 1, **dadurch gekennzeichnet, dass** die Gruppe A¹-(Z-A²-)ₘ- aus den folgenden Formeln ausgewählt ist 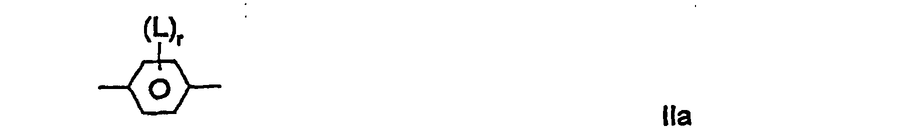 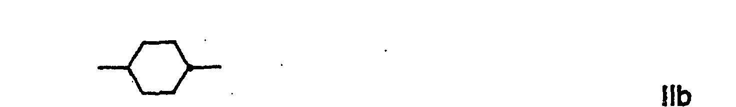 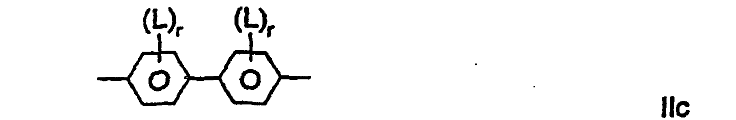 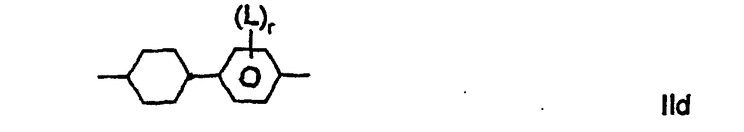 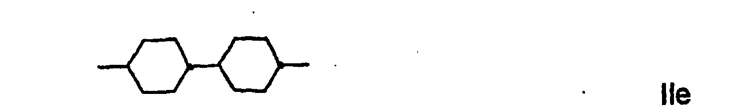 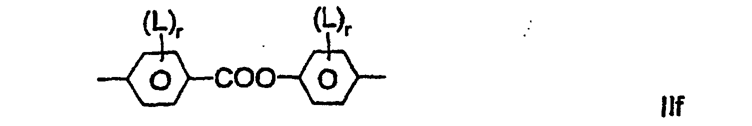 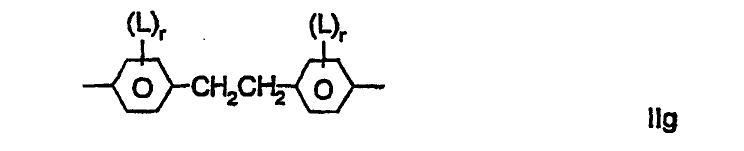 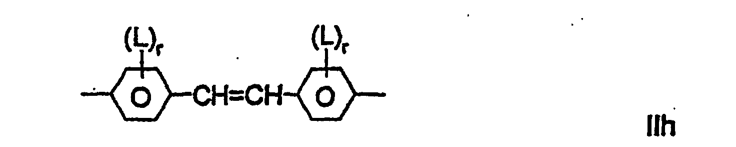 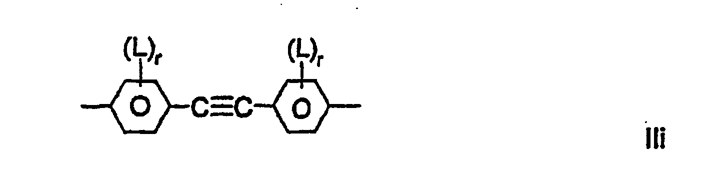 worin L jeweils unabhängig Halogen, eine Cyan- oder Nitrogruppe oder eine Alkyl-, Alkoxy- oder Alkanoylgruppe mit 1 bis 7 C-Atomen bedeutet, in denen ein oder mehrere H-Atome durch F oder Cl substituiert sein können, und r 0, 1 oder 2 ist.

3. Mesogenes Estradiol nach mindestens einem der Ansprüche 1 und 2, **dadurch gekennzeichnet, dass** Y -CO- und Sp² Alkylen mit 1 bis 12 C-Atomen bedeutet.

4. Mesogenes Estradiol nach mindestens einem der Ansprüche 1 bis 3, **dadurch gekennzeichnet, dass** R² F, Cl, CN, NO₂, CF₃, OCF₃, OCHF₂ oder OC₂F₅ bedeutet.

5. Mesogenes Estradiol nach mindestens einem der Ansprüche 1 bis 4, **dadurch gekennzeichnet, dass** R¹ P-Sp¹-X- bedeutet.

6. Mesogenes Estradiol nach Anspruch 5, **dadurch gekennzeichnet, dass** P Acryl, Methacryl, Vinyl, Vinyloxy, Expoxy oder Styrol bedeutet.

7. Mesogenes Estradiol nach Anspruch 6, **dadurch gekennzeichnet, dass** P eine Vinylgruppe bedeutet.

8. Mesogenes Estradiol nach mindestens einem der Ansprüche 1 bis 7, **dadurch gekennzeichnet, dass** X eine Einfachbindung, Y -CO-, Sp² Alkylen mit 1 bis 12 C-Atomen und Sp¹ Alkylen mit bis zu 12 C-Atomen oder eine Einfachbindung bedeutet.

9. Flüssigkristalline Mischung enthaltend mindestens ein mesogenes Estradiol nach mindestens einem der Ansprüche 1 bis 8.

10. Flüssigkristalline Mischung nach Anspruch 9, **dadurch gekennzeichnet, dass** sie 5 bis 90 Gew.-% des mindestens einen mesogenen Estradiols enthält.

11. Polymerisierbare flüssigkristalline Mischung, **dadurch gekennzeichnet, dass** sie mindestens zwei polymerisierbare Verbindungen enthält, von denen mindestens eine ein mesogenes Estradiol nach mindestens einem der Ansprüche 5 bis 8 ist.

12. Polymerisierbare flüssigkristalline Mischung nach Anspruch 11, **dadurch gekennzeichnet, dass** sie 1 bis 80 Gew.-% des mindestens einen mesogenen Estradiols enthält.

13. Polymerisierbare flüssigkristalline Mischung nach Anspruch 11 oder 12, **dadurch gekennzeichnet, dass** sie eine oder mehrere polymerisierbare Verbindungen ausgewählt aus der Formel V
P-(Sp-X)ₙ-(A¹-Z¹)ₘ-A²-R⁵ V
enthält, worin P, Sp, X, n, A¹ und A² die bei Formel I angegebenen Bedeutung haben, m 0, 1 oder 2 ist, Z¹ eine der Bedeutungen von Z in Formel I hat und R⁵ eine der Bedeutungen von R¹ oder R² in Formel I hat.

14. Polymerisierbare flüssigkristalline Mischung nach mindestens einem der Ansprüche 11 bis 13, **dadurch gekennzeichnet, dass** sie eine oder mehrere polymerisierbare Verbindungen enthält, die aus den folgenden Formeln ausgewählt sind 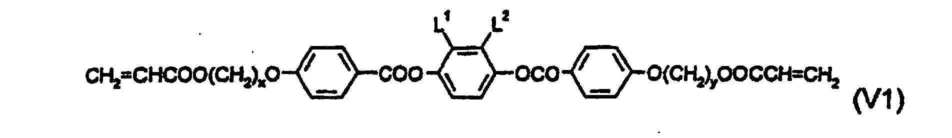 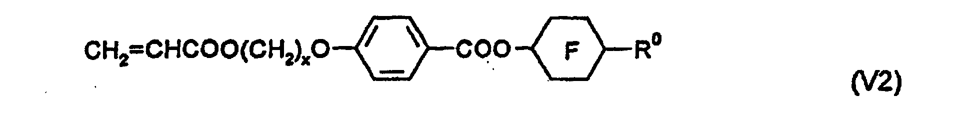 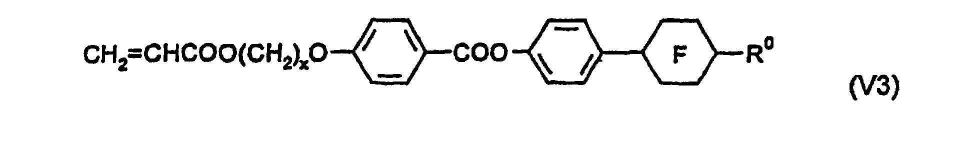 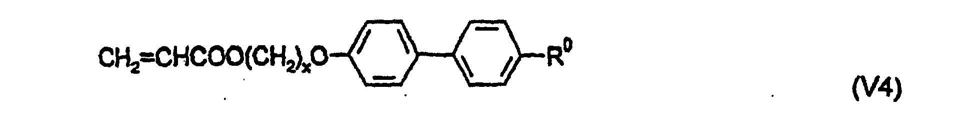 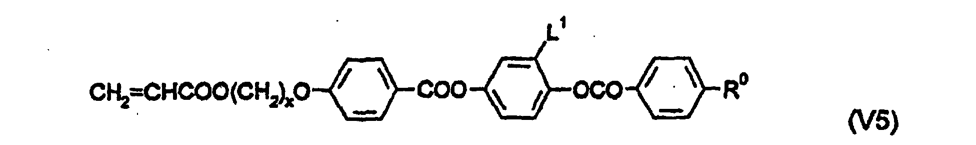 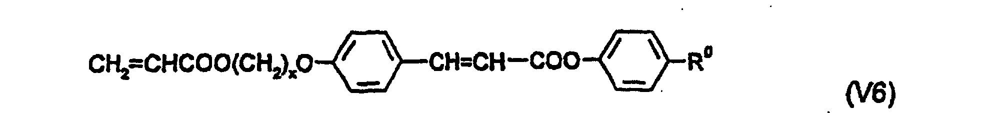 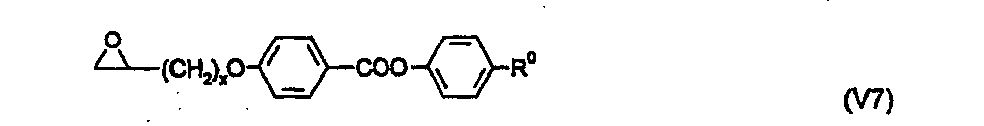 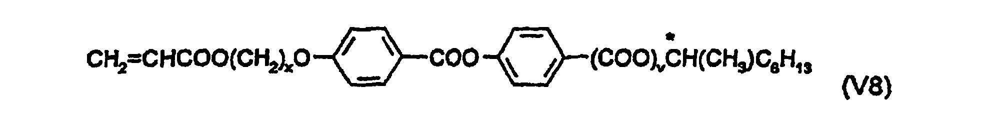 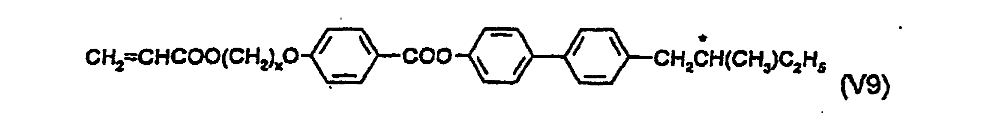 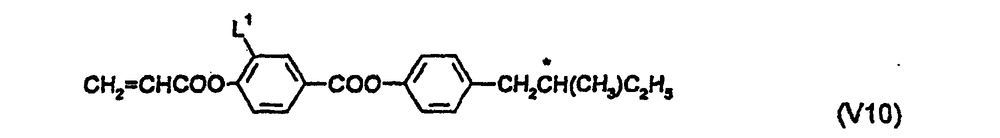 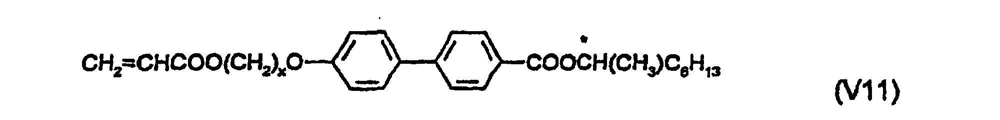 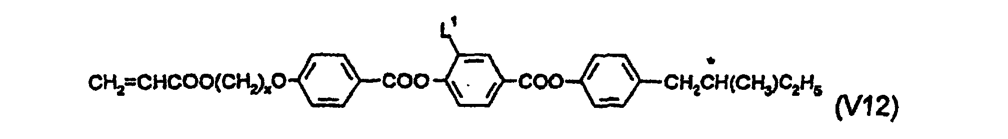 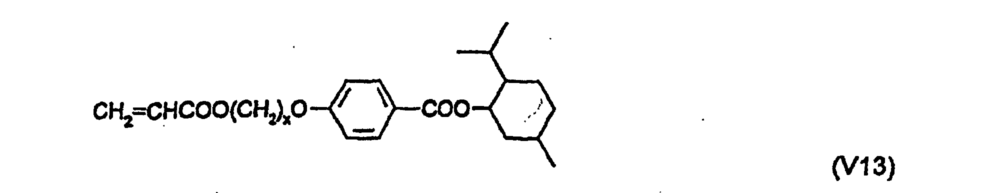 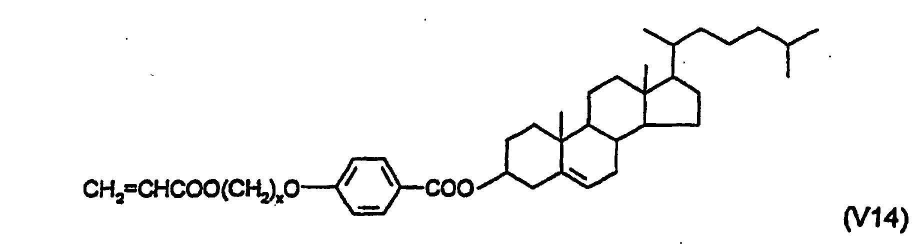 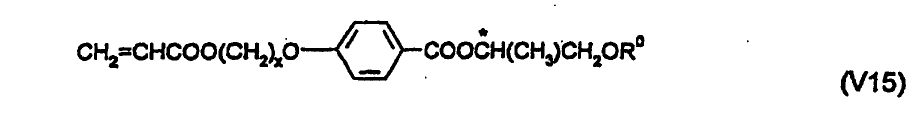 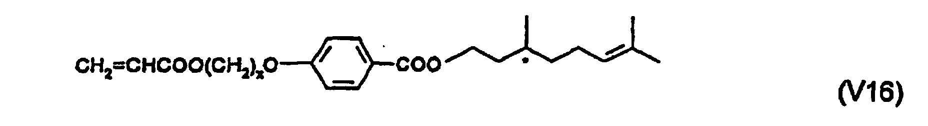 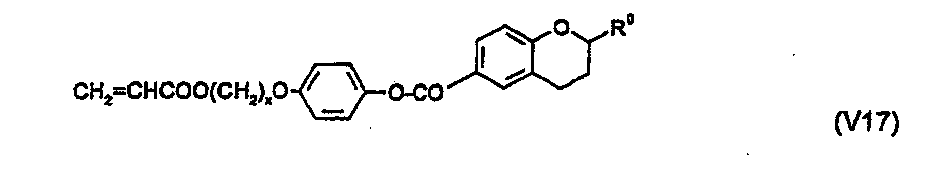 worin x und y jeweils unabhängig 1 bis 12 sind, F eine 1,4-Phenylenoder 1,4-Cyclohexylengruppe bedeutet, R⁰ Halogen, Cyan oder eine gegebenenfalls halogenierte Alkyl- oder Alkoxygruppe mit 1 bis 12 C-Atomen bedeutet und L¹ und L² jewells unabhängig H, F, Cl, CN oder eine gegebenenfalls halogenierte Alkyl-, Alkoxy- oder Alkanoylgruppe mit 1 bis 7 C-Atomen bedeuten.

15. Chirales lineares, cyclisches oder vernetztes anisotropes Oligomer oder Polymer, erhältlich durch Polymerisation einer oder mehrerer polymerisierbarer mesogener Estradiolverbindungen nach einem der Ansprüche 5 bis 8, einer flüssigkristallinen Mischung nach Anspruch 9 oder 10 enthaltend mindestens ein polymerisierbares mesogenes Estradiol nach mindestens einem der Ansprüche 5 bis 8, einer polymerisierbaren flüssigkristallinen Mischung nach mindestens einem der Ansprüche 11 bis 14 oder durch Kuppeln der Estradiolverbindungen oder Mischungen an ein Oligomer- oder Polymergerüst.

16. Oligo- oder Polysiloxane nach Anspruch 15, **dadurch gekennzeichnet, dass** sie aus den folgenden Formeln ausgewählt sind 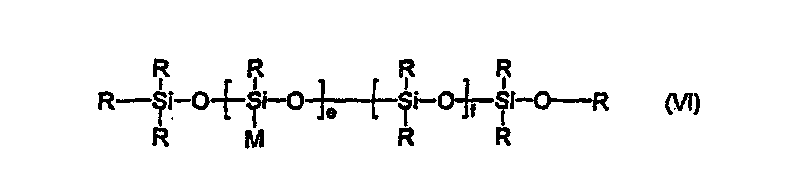 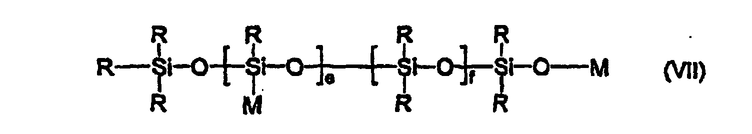 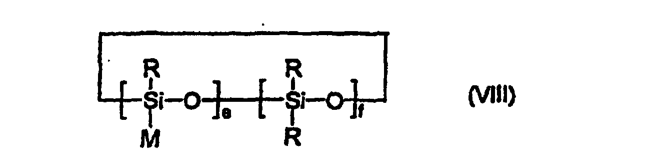 worin
R jeweils unabhängig voneinander eine Alkylgruppe mit 1 bis 18 C-Atomen bedeuten, die unsubstituiert oder ein- oder mehrfach mit Halogen, Cyan- oder Nitrogruppen substituiert sein kann,
e eine ganze Zahl von 1 bis 100 ist,
f eine ganze Zahl von 1 bis 100 ist, und
M 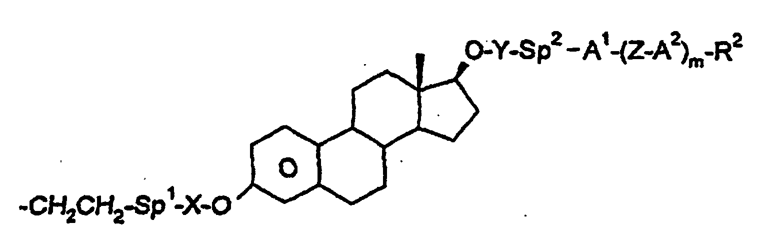 bedeutet, wobei Sp¹, Sp², X, Y, -A¹-(Z-A²-)ₘ- und R² eine der in einem der Ansprüche 1 bis 8 angegebenen Bedeutungen besitzen.

17. Verwendung eines mesogenen Estradiols nach mindestens einem der Ansprüche 1 bis 8, einer Mischung nach mindestens einem der Ansprüche 9 bis 14 oder eines Oligomers oder Polymers nach Anspruch 15 oder 16 in Flüssigkristallanzeigen, wie STN-, TN-, AMD-TN-, Temperaturkompensations-, Guest-Host- oder Phasenwechselanzeigen, Anzeigen mit oberflächenstabilisierter oder polymerstabilisierter cholesterischer Textur (SSCT, PSCT) oder flexoelektrischen Anzeigevorrichtungen, in aktiven und passiven optischen Elementen wie Polarisatoren, Kompensatoren, Orientierungsschichten, Farbfiltern oder holographischen Elementen, in Klebstoffen, Kunstharzen mit anisotropen mechanischen Eigenschaften, Kosmetika, Diagnostika, Flüssigkristallpigmenten, für dekorative und Sicherheitsanwendungen, in der nichtlinearen Optik, in der optischen Datenspeicherung oder als chirale Dotierstoffe.

18. Flexoelektrische Flüssigkristallvorrichtung enthaltend ein mesogenes Estradiol nach mindestens einem der Ansprüche 1 bis 8, eine Flüssigkristallmischung nach mindestens einem der Ansprüche 9 bis 14 oder ein lineares, cyclisches oder vernetztes anisotropes Oligomer oder Polymer nach Anspruch 15 oder 16.

## Revendications

1. Estradiols mésogènes de formule I 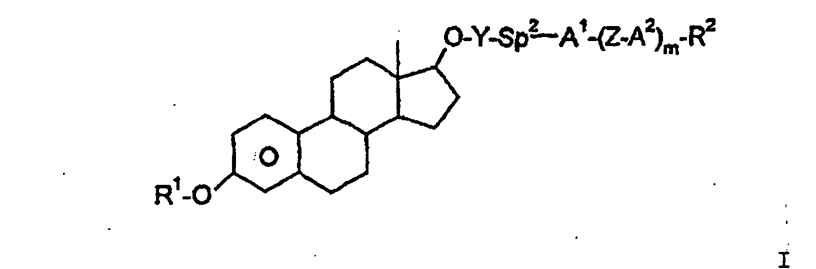 dans laquelle
R¹ représente un groupe alkyle contenant 1 à 12 atomes de C, dans lequel un ou plusieurs groupes CH_{2,}non adjacents peuvent être remplacés par -O-, -CH=CH-, -CO-, -OCO- ou - COO-, de sorte que les atomes d'oxygène ne soient pas directement liés les uns aux autres, ou représente P-Sp¹-X- P représente un groupe polymérisable,
Sp¹ et Sp² représentent chacun indépendamment un groupe espaceur avec jusqu'à 20 atomes de C, ou une simple liaison,
X et Y représentent chacun indépendamment -CO-, -CS-, -OCO-, -COO- ou une simple liaison,
A¹ et A² représentent chacun indépendamment un groupe 1,4-phénylène dans lequel, en outre, on peut remplacer un ou plusieurs groupes CH par N,1,4-cyclohexylène dans lequel, en outre, on peut remplacer un ou plusieurs groupes CH₂ non adjacents par O et/ou S, un groupe 4-cyclohexenylène, 1,4-bicyclo(2,2,2)octylène, pipéridine-1,4-diyle, naphtalène-2,6-diyle, décahydronaphtalène-2,6-diyle, ou 1,2,3,4-tétrahydronaphtalène-2,6-diyle, avec la possibilité que tous ces groupes soient non substitués, mono- ou polysubstitués par des atomes d'halogène, des groupes cyano ou nitro, ou des groupes alkyle, alcoxy ou alcanoyle contenant 1 à 7 atomes de C, dans lesquels un ou plusieurs atomes de H peuvent être remplacés par F ou Cl,
Z représente dans chaque cas indépendamment -COO-, -OCO-, -CH₂CH₂-, -OCH₂-, -CH₂O-, -CH=CH-, -N=N-, -CH=CH-COO-, -OCO-CH=CH-, -C=C ou une simple liaison,
m vaut 0, 1 ou 2, et
R représente F, Cl, CN, NO₂ ou une chaîne linéaire polaire ou un groupe alkyle ou alcoxy ramifié contenant jusqu'à 12 atomes de C qui est éventuellement mono- ou polysubstitué par F, Cl et/ou CN.

2. Estradiol mésogène selon la revendication 1, **caractérisé en ce que** le groupe A¹-(Z-A²-)ₘ- est choisi parmi les formules suivantes 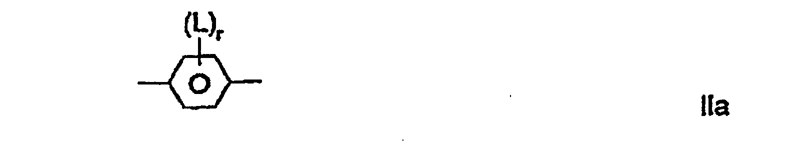 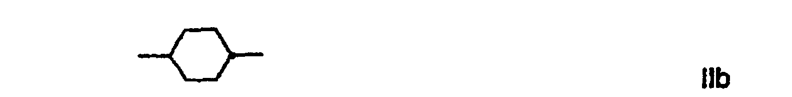 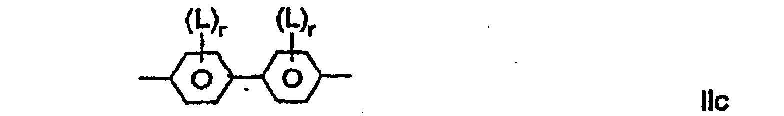 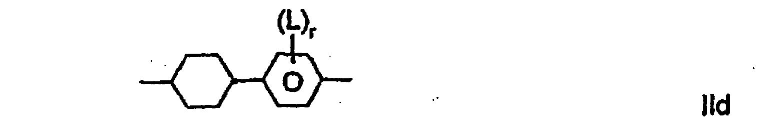 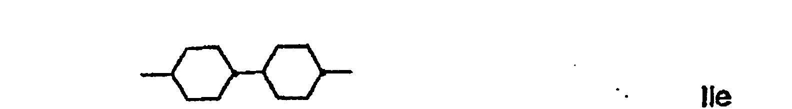 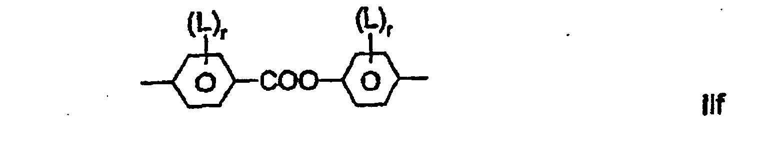 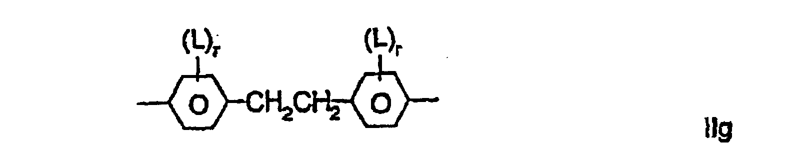 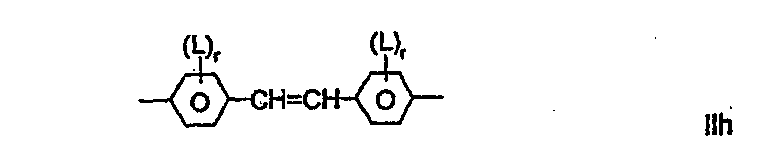 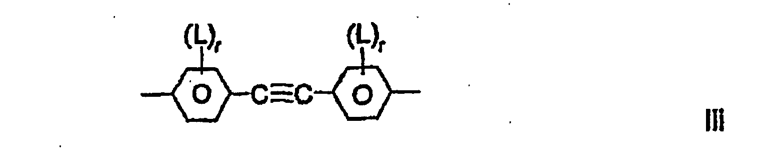 dans lesquelles L représente dans chaque cas indépendamment un atome d'halogène, un groupe cyano ou nitro ou un groupe alkyle, alcoxy ou alcanoyle contenant 1 à 7 atomes de C, dans lesquels un ou plusieurs atomes H peuvent être remplacés par F ou Cl, et r vaut 0, 1 ou 2.

3. Estradiol mésogène selon au moins une des revendications 1 et 2, **caractérisé en ce que** Y représente -CO- et Sp² représente un groupe alkylène contenant 1 à 12 atomes de C.

4. Estradiol mésogène selon au moins une des revendications 1 à 3, **caractérisé en ce que** R² représente F, Cl, CN, NO₂, CF₃, OCF₃, OCHF₂ or OC₂F₅.

5. Estradiol mésogène selon au moins une des revendications 1 à 4, **caractérisé en ce que** R¹ représente P-Sp¹-X-.

6. Estradiol mésogène selon la revendication 5, **caractérisé en ce que** P représente un groupe acryle, méthacryle, vinyle, vinyloxy, époxy ou styrène.

7. Estradiol mésogène selon la revendication 6, **caractérisé en ce que** P représente un groupe vinyle.

8. Estradiol mésogène selon au moins une des revendications 1 à 7, **caractérisé en ce que** X représente une simple liaison, Y représente -CO-, Sp² représente un groupe alkylène contenant 1 à 12 atomes de C et Sp¹ représente un groupe alkylène contenant jusqu'à 12 atomes de C ou une simple liaison.

9. Mélange cristallin liquide comprenant au moins un estradiol mésogène selon au moins une des revendications 1 à 8.

10. Mélange cristallin liquide selon la revendication 9, **caractérisé** en qu'il comprend 5 à 90 % en poids dudit au moins un estradiol mésogène.

11. Mélange cristallin liquide polymérisable **caractérisé en ce qu'**il comprend au moins deux composés polymérisables, dont au moins un est un estradiol mésogène selon au moins une des revendications 5 à 8.

12. Mélange cristallin liquide polymérisable, selon la revendication 11, **caractérisé en ce qu'**il comprend 1 à 80 % en poids dudit au moins un estradiol mésogène.

13. Mélange cristallin liquide polymérisable selon la revendication 11 ou 12, **caractérisé en ce qu'**il comprend un ou plusieurs composés polymérisables sélectionnés de formule V
P-(Sp-X)ₙ-(A¹-Z¹)ₘ-A²-R⁵ V
dans laquelle P, Sp, X, n, A¹ et A² ont la signification de la formule I, m vaut 0, 1 ou 2, Z¹ a une des significations de Z dans la formule I, et R⁵ a une des significations de R¹ ou R² dans la formule I.

14. Mélange cristallin liquide polymérisable selon au moins une des revendications 11 à 13, **caractérisé en ce qu'**il comprend un ou plusieurs composés polymérisables choisis parmi les formules suivantes : 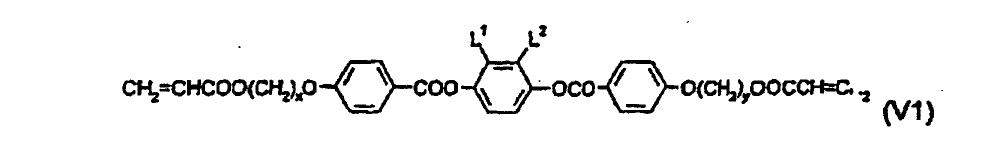 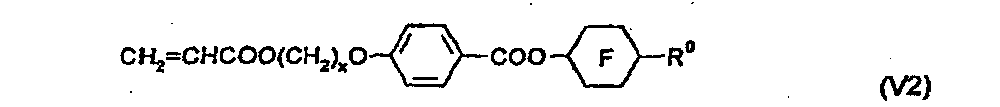 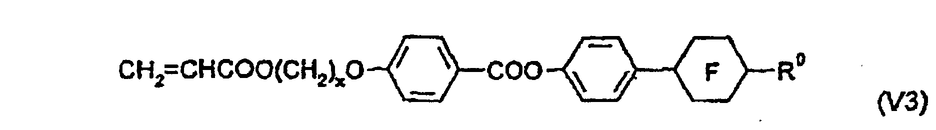 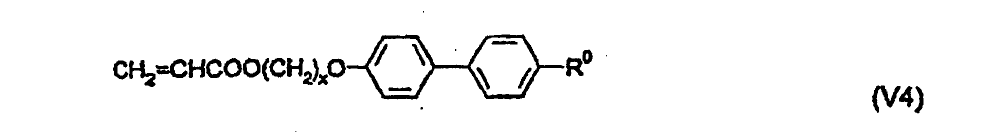 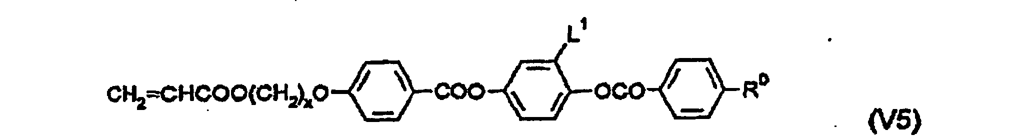 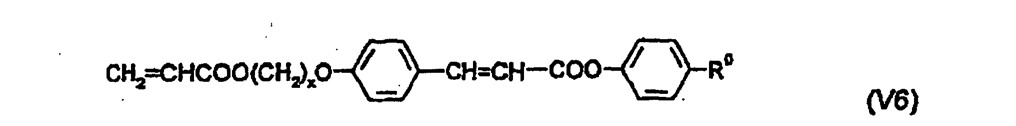 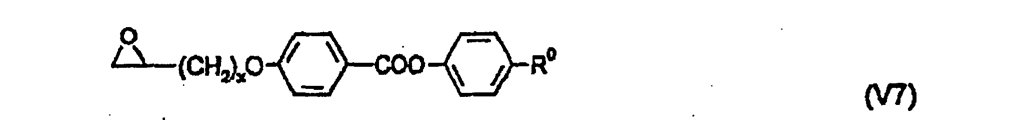 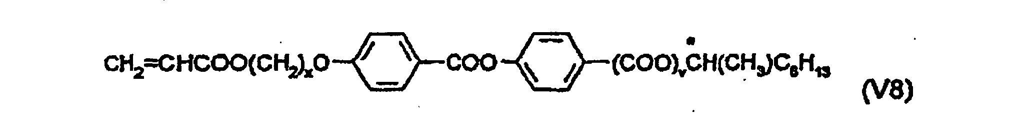 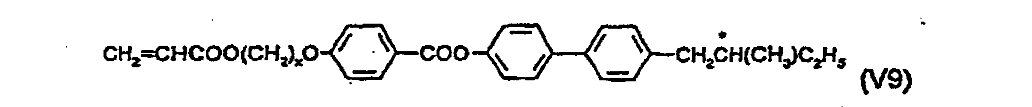 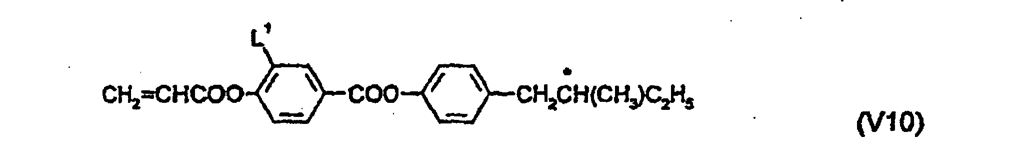 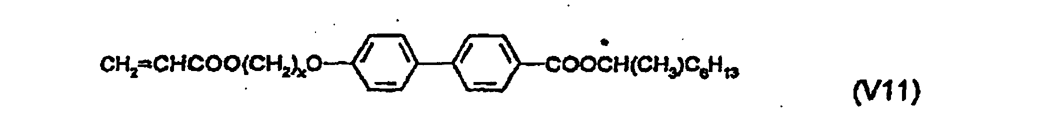 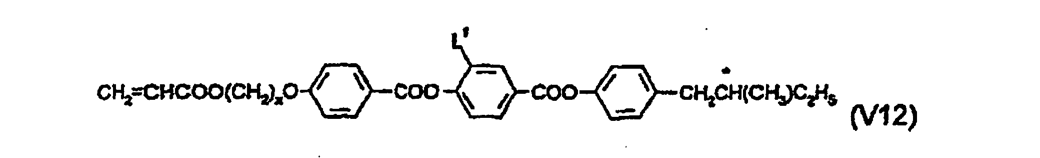 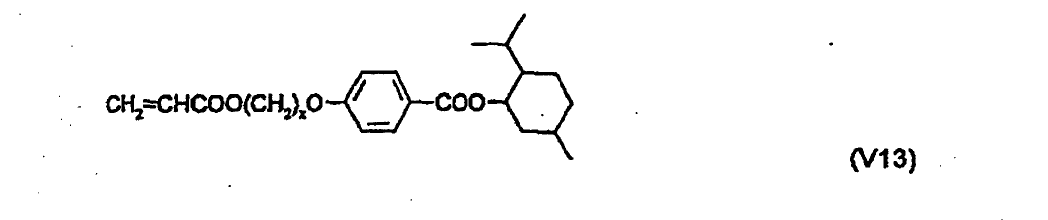 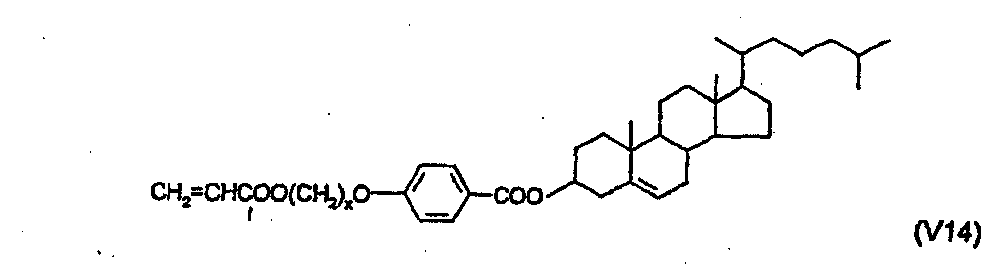 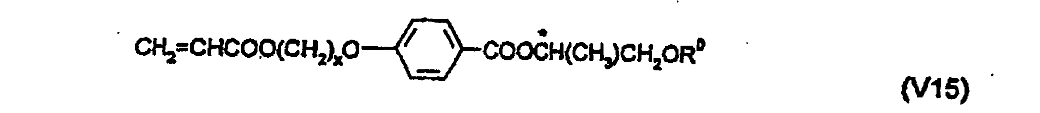 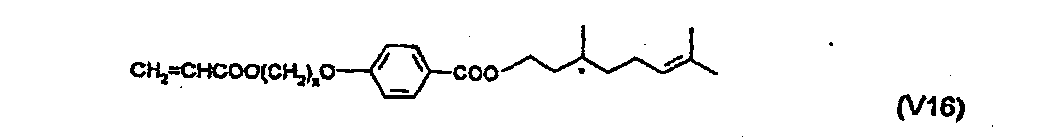 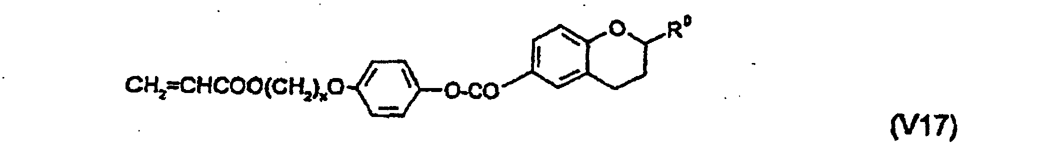 dans lesquelles x et y valent chacun indépendamment 1 à 12, F représente un groupe 1,4-phénylène ou 1,4-cyclohexylène, R° représente un atome d'halogène, un groupe cyano ou un groupe alkyle ou alcoxy éventuellement halogéné contenant 1 à 12 atomes de C et L¹ et L² représentent chacun indépendamment, H, F Cl, CN ou un groupe alkyle, alcoxy ou alcanoyle éventuellement halogéné contenant 1 à 7 atomes de C.

15. Oligomère ou polymère anisotrope chiral linéaire, cyclique ou réticulé pouvant être obtenu en polymérisant un ou plusieurs composés d'estradiol mésogène polymérisable selon l'une quelconque des revendications 5 à 8, un mélange cristallin liquide selon la revendication 9 ou 10 comprenant au moins un estradiol mésogène polymérisable selon au moins une des revendications 5 à 8, un mélange cristallin liquide polymérisable selon au moins une des revendications 11 à 14, ou en couplant lesdits composés ou mélange d'estradiol à un squelette d'oligomère ou de polymère.

16. Oligo- ou polysiloxanes selon la revendication 15, **caractérisé en ce qu'**ils sont choisis parmi les formules suivantes : 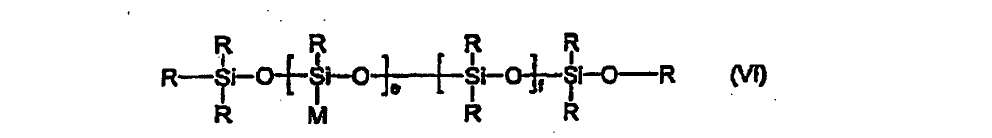 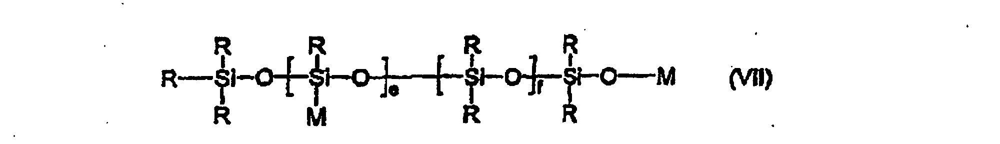 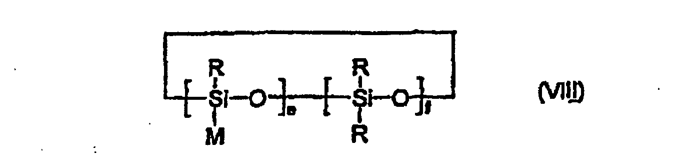 dans lesquelles
R représente, dans chaque cas indépendamment les uns des autres, un groupe alkyle contenant 1 à 18 atomes de C qui peut être non substitué ou mono- ou polysubstitué par des atomes d'halogène, des groupes cyano ou nitro,
e est un nombre entier de 1 à 100,
f est un nombre entier de 0 à 100 et
m représente 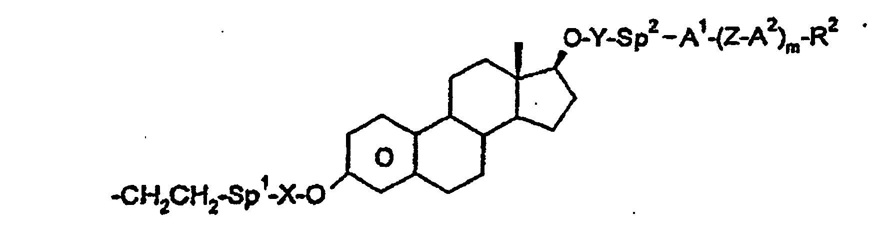 avec Sp¹, Sp², X, Y, -A¹-(Z-A²)ₘ- et R² ayant l'une des significations données dans l'une quelconque des revendications 1 à 8.

17. Utilisation d'un estradiol mésogène selon au moins une des revendications 1 à 8, d'un mélange selon au moins une des revendications 9 à 14, ou d'un oligomère ou d'un polymère selon la revendication 15 ou 16, dans des affichages à cristaux liquides, tels que des affichages STN, TN, AMD-TN, à compensation de température, dichroïque (guest-host), à changement de phase ou à texture cholestérique stabilisée en surface ou stabilisée par un polymère (SSCT, PSCT) ou des dispositifs à affichage flexoélectrique, dans des éléments optiques actifs et passifs comme des polariseurs, des compensateurs, des couches d'alignement, des filtres colorés ou des éléments holographiques, dans des adhésifs, des résines synthétiques avec des propriétés mécaniques anisotropes, des produits cosmétiques, des produits de diagnostic, des pigments à cristaux liquides, pour des applications décoratives et de sécurité, dans des éléments optiques non linéaires, le stockage d'informations optiques ou comme dopants chiraux.

18. Dispositif à cristaux liquides flexoélectriques comprenant un estradiol mésogène selon au moins une des revendications 1 à 8, un mélange de cristaux liquides selon au moins une des revendications 9 à 14, ou un oligo- ou polymère anisotrope linéaire, cyclique ou réticulé selon la revendication 15 ou 16.
